(19) Europäisches Patentamt / European Patent Office / Office européen des brevets

(11) **EP 4 752 105 A1**

(12) **EUROPEAN PATENT APPLICATION**
published in accordance with Art. 153(4) EPC

(43) Date of publication:
03.06.2026 Bulletin 2026/23

(21) Application number: 24845679.0

(22) Date of filing: 25.07.2024

(51) International Patent Classification (IPC):
*C01B 32/05* (2017.01)

(52) Cooperative Patent Classification (CPC):
C01B 32/05

(86) International application number:
PCT/JP2024/026680

(87) International publication number:
WO 2025/023305 (30.01.2025 Gazette 2025/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.07.2023 JP 2023121752
26.07.2023 JP 2023121762
26.07.2023 JP 2023121784

(71) Applicant: Denka Company Limited
Tokyo 103-8338 (JP)

(72) Inventors:
• OKI TERAO, Yuri
Tokyo 103-8338 (JP)
• OSUMI, Shinichiro
Tokyo 103-8338 (JP)
• EBISUZAKI ARAI, Takako
Tokyo 103-8338 (JP)

(74) Representative: Hoffmann Eitle
Patent- und Rechtsanwälte PartmbB
Arabellastraße 30
81925 München (DE)

(54) **POROUS CARBON MATERIAL AND PRODUCTION METHOD THEREFOR**

(57) A porous carbon material having a first peak positioned in a pore size range of 3 nm or more and less than 10 nm and a second peak positioned in a pore size range of 10 nm or more and 1 $\mu$m or less in a pore size distribution measured by mercury intrusion porosimetry, the porous carbon material satisfying at least one of the following (A), (B), or (C): (A) having a peak (i) that has a full width at half maximum of 0.6° or less and a peak top within the range of 2$\theta$ = 25° to 27° in an X-ray diffraction pattern; (B) having a nitrogen adsorption amount at a relative pressure of 0.2 of 10 cm$^3$/g or more and 250 cm$^3$/g or less in a nitrogen adsorption measurement; or (C) having a surface oxygen concentration measured by XPS of 6 at% or less.

[Fig. 1]

(a)

(b)

EP 4 752 105 A1

**Description**

**TECHNICAL FIELD**

The present disclosure relates to a porous carbon material and a production method therefor.

**BACKGROUND**

Carbon materials, particularly, porous carbon materials having pores, are useful in applications such as catalyst supports and electrode materials, and studies are underway regarding various production methods. For example, Patent Document 1 discloses a method in which a mixture obtained by adding a solvent to a block copolymer having a hydrophilic block and a hydrophobic block, a phenolic compound, and formaldehyde is heated to obtain porous carbon and the porous carbon is activated to obtain activated carbon.

**CITATION LIST**

**PATENT LITERATURE**

Patent Document 1: JP 2014-034475 A

**SUMMARY OF INVENTION**

**TECHNICAL PROBLEM**

Porous carbon materials with better oxidation resistance are desired with the expanded applications thereof in recent years.
An object of the present disclosure is to provide a porous carbon material that has excellent oxidation resistance and is suitable as a catalyst support. In addition, another objective of the present disclosure is to provide a method for producing a porous carbon material enabling the aforementioned porous carbon material to be easily produced.

**SOLUTION TO PROBLEM**

The present disclosure relates, for example, to the following [1] to [20].
[1] A porous carbon material having a first peak positioned in a pore size range of 3 nm or more and less than 10 nm and a second peak positioned in a pore size range of 10 nm or more and 1 $\mu$m or less in a pore size distribution measured by mercury intrusion porosimetry, the porous carbon material satisfying at least one of the following (A), (B), or (C):

(A) having a peak (i) that has a full width at half maximum of 0.6° or less and a peak top within the range of $2\theta = 25°$ to 27° in an X-ray diffraction pattern;
(B) having a nitrogen adsorption amount at a relative pressure of 0.2 of 10 $cm^3$/g or more and 250 $cm^3$/g or less in a nitrogen adsorption measurement; or
(C) having a surface oxygen concentration measured by XPS of 6 at% or less.

[2] The porous carbon material according to [1], satisfying (A).
[3] The porous carbon material according to [2], further having a peak (ii) that has a full width at half maximum of 9° or less and partially overlaps with the peak (i) in an X-ray diffraction pattern.
[4] The porous carbon material according to [1], satisfying (B).
[5] The porous carbon material according to [4], in which the nitrogen adsorption amount of the porous carbon material is 10 $cm^3$/g or more and 200 $cm^3$/g or less.
[6] The porous carbon material according to [1], satisfying (C).
[7] The porous carbon material according to [6], in which the porous carbon material has a surface oxygen concentration measured by XPS of 2 at% or less, and
has a surface carbon concentration measured by XPS of 98 at% or more.
[8] The porous carbon material according to any one of [1] to [7], in which the porous carbon material has a specific surface area of 200 $m^2$/g or more and 1800 $m^2$/g or less.
[9] The porous carbon material according to any one of [1] to [7], in which the first peak is positioned in a pore size range of 4 nm or more and 7 nm or less.

[10] The porous carbon material according to any one of [1] to [7], in which the second peak is positioned in a pore size range of 20 nm or more and 700 nm or less.

[11] A method for producing a porous carbon material, the method including:

a preparation step of preparing a resin-molded article containing a resin material serving as a carbon source, a first template, and a second template; and
a heat treatment step of obtaining the porous carbon material according to [2] or [3] by heat-treating the resin-molded article, and
the heat treatment step includes heat treatment at 1200 °C or higher,
the first template includes amphiphilic molecules, and
the second template includes latex particles.

[12] The method for producing a porous carbon material according to [11], in which the heat treatment step includes:

a first heat treatment step of obtaining a first heat-treated body by heat-treating the resin-molded article at a heat treatment temperature of less than 1200 °C; and
a second heat treatment step of heat-treating the first heat-treated body at a heat treatment temperature of 1500 °C or higher.

[13] The method for producing a porous carbon material according to [11], in which the heat treatment step includes:

a first heat treatment step of obtaining a first heat-treated body by heat-treating the resin-molded article at a heat treatment temperature of less than 1200 °C;
a pulverization step of pulverizing the first heat-treated body; and
a second heat treatment step of heat-treating the first heat-treated body that was pulverized in the pulverization step at a heat treatment temperature of 1500 °C or higher.

[14] The method for producing the porous carbon material according to [11], in which the heat treatment step includes heat treatment at 2000 °C or higher.

[15] The method for producing a porous carbon material according to [11], in which heat treatment at 1500 °C or higher in the heat treatment step is performed in an argon atmosphere.

[16] A method for producing a porous carbon material, the method including:

a preparation step of preparing a resin-molded article containing a resin material serving as a carbon source, a first template, and a second template; and
a heat treatment step of obtaining the porous carbon material according to any one of [4] to [7] by heat-treating the resin-molded article, and
the heat treatment step includes heat treatment at 1100 °C or higher,
the first template includes amphiphilic molecules, and
the second template includes latex particles.

[17] The method for producing a porous carbon material according to [16], in which the heat treatment step includes:

a first heat treatment step of obtaining a first heat-treated body by heat-treating the resin-molded article at a heat treatment temperature of less than 1100 °C; and
a second heat treatment step of heat-treating the first heat-treated body at a heat treatment temperature of 1100 °C or higher.

[18] The method for producing a porous carbon material according to [16], in which the heat treatment step includes:

a first heat treatment step of obtaining a first heat-treated body by heat-treating the resin-molded article at a heat treatment temperature of less than 1100 °C;
a pulverization step of pulverizing the first heat-treated body; and
a second heat treatment step of heat-treating the first heat-treated body that was pulverized in the pulverization step at a heat treatment temperature of 1100 °C or higher.

[19] The method for producing the porous carbon material according to [16], in which the heat treatment step includes heat treatment at 2000 °C or higher.

[20] The method for producing a porous carbon material according to [16], in which heat treatment at 1100 °C or higher in the heat treatment step is performed in an argon atmosphere.

## EFFECTS OF INVENTION

According to the present disclosure, a porous carbon material that has excellent oxidation resistance and is suitable as a catalyst support is provided. In addition, according to the present disclosure, a method for producing a porous carbon material enabling the aforementioned porous carbon material to be easily produced is provided.

## BRIEF DESCRIPTION OF DRAWINGS

Figure 1(a) is a section view schematically showing one example of a resin-molded article, and Figure 1(b) is a section view schematically showing one example of a porous carbon material.

Figure 2 shows a pore size distribution curve of the porous carbon material obtained in Example A-1.

Figure 3 shows the X-ray diffraction pattern of the porous carbon material obtained in Example A-1.

## DESCRIPTION OF EMBODIMENTS

In the present disclosure, a porous carbon material is a carbon material having a plurality of pores. The porous carbon material satisfies at least one of the following (A), (B), or (C):

(A) having a peak (i) that has a full width at half maximum of 0.6° or less and a peak top within the range of $2\theta = 25°$ to 27° in an X-ray diffraction pattern;
(B) having a nitrogen adsorption amount at a relative pressure of 0.2 of 10 $cm^3$/g or more and 250 $cm^3$/g or less in a nitrogen adsorption measurement; or
(C) having a surface oxygen concentration measured by XPS of 6 at% or less.

The porous carbon material may satisfy two or more of (A), (B), and (C), and may satisfy all three.
Preferred embodiments of a porous carbon material satisfying (A), a porous carbon material satisfying (B), and a porous carbon material satisfying (C) will be described in detail below.

[Porous Carbon Material Satisfying (A)]

The porous carbon material of the present embodiment has a first peak positioned in a pore size range of 3 nm or more and less than 10 nm and a second peak positioned in a pore size range of 10 nm or more and 1 $\mu$m or less in a pore size distribution measured by mercury intrusion porosimetry. Note that "having a peak in a pore size range of $A_1$ to $A_2$ in a pore size distribution" means that a peak having a peak top in a pore size range of $A_1$ to $A_2$ is present in the pore size distribution curve.
The porous carbon material of the present embodiment can be regarded as having a first pore group forming the first peak and a second pore group forming the second peak. In addition, the porous carbon material of the present embodiment can also be regarded as having a microstructure formed by the first pore group and a higher-order structure formed by the second pore group.
In the porous carbon material of the present embodiment, because a reaction substrate can efficiently move through large voids in the higher-order structure, it is possible to efficiently transport the reaction substrate to a reaction site and efficiently discharge a reaction product. In addition, the porous carbon material of the present embodiment has the first pore group, which makes it possible to achieve a high specific surface area and efficiently support an active metal. Furthermore, in the present embodiment, by coating with a coating material along the higher-order structure, it is possible to provide the coating material on the porous carbon material without poisoning or burying the active metal supported in the microstructure. Thus, according to the porous carbon material of the present embodiment, the reaction substrate can easily reach the reaction site and, even when coated with the coating material, the reaction site can effectively function. For this reason, the porous carbon material of the present embodiment is suitable as a catalyst support.

The first peak is positioned in a pore size range of 3 nm or more and less than 10 nm, and is preferably positioned in a pore size range of 4 nm or more and 7 nm or less. The second peak is positioned in a pore size range of 10 nm or more and 1 μm or less, and is preferably positioned in a pore size range of 20 nm or more and 200 nm or less. As a result, the effects discussed above are more significantly exhibited.

The first peak and the second peak may each be a peak having a peak value of 0.1 mL/g or more, and are preferably peaks having a peak value of 0.5 mL/g or more. In addition, the first peak and the second peak may each have a peak value of 4 mL/g or less, and may have a peak value of 2 mL/g or less.

The first peak and the second peak are preferably the peak having the highest peak value (peak A) or the peak having the second highest peak value (peak B) among the peaks positioned in a pore size range of 3 nm or more and 1 μm or less. That is, when the first peak is peak A, the second peak is preferably peak B, and when the first peak is peak B, the second peak is preferably peak A.

Note that herein, the pore size distribution of the porous carbon material is measured by mercury intrusion porosimetry. More specifically, the pore size distribution is measured with the method below.
In addition, the pore size distribution is represented by a pore size distribution curve with the horizontal axis indicating the pore size (pore diameter) (logarithmic scale) and the vertical axis indicating the log differential pore volume (linear scale).

<Measurement of Pore Size Distribution>

First, 40 to 80 mg of the porous carbon material is collected in a 5 cc measurement cell. Next, using an automatic mercury porosimeter (AutoPore V 9620 manufactured by Micromeritics Instrument Corporation-Shimadzu Corporation), the mercury pressure is raised from 1 psia to 60,000 psia, and the amount of mercury intrusion is measured. Then, the pore size distribution is determined from the curve that is obtained from the pressure and amount of intrusion. The mercury contact angle is set to 130 degrees, and the mercury surface tension is set to 485 dynes/cm.

The porous carbon material of the present embodiment has a peak (i) that has a full width at half maximum of 0.6° or less and a peak top within the range of $2\theta = 25°$ to 27° in an X-ray diffraction pattern.

It can be concluded that regions with high crystallinity are formed in some portions of the porous carbon material having the peak (i) above. In the present embodiment, it is considered that excellent oxidation resistance is achieved as a result of the porous carbon material having regions with high crystallinity. Such a porous carbon material can be formed by a heat treatment step that includes heat treatment at 1500 °C or higher, as indicated for example in the production method discussed below.

The full width at half maximum of the peak (i) may be, for example, 0.5° or less. In addition, the full width at half maximum of the peak (i) may be, for example, 0.1° or more, 0.2° or more, or 0.3° or more.

The crystallite size of the peak (i) may be, for example, 60 nm or less, 55 nm or less, 50 nm or less, or 45 nm or less. In addition, the crystallite size of the peak (i) may be, for example, 20 nm or more.

The porous carbon material of the present embodiment may further have a peak (ii) that has a full width at half maximum of 9° or less and partially overlaps with the peak (i) in an X-ray diffraction pattern. That is, it can be concluded that the peak (i) is a peak present at a position coinciding with the peak (ii).

The full width at half maximum of the peak (ii) may be, for example, 8.5° or less. In addition, the full width at half maximum of the peak (ii) may be, for example, 1.0° or more, 4.0° or more, or 7.0° or more.
The peak height ratio of the peak (i) to the peak (ii) may be, for example, 0.1 or more, 0.2 or more, or 0.3 or more. In addition, the peak height ratio of the peak (i) to the peak (ii) may be, for example, 5.0 or less, 3.0 or less, or 1.5 or less.

Note that herein, the X-ray diffraction pattern of the porous carbon material is measured by the method below.

<Measurement of X-Ray Diffraction Pattern>

The porous carbon material is placed on an Si zero-background sample holder (filling section: 20 mm × 18 mm × 0.2 mm thickness) and spread out with a glass plate such that the sample surface (height of the portion filled with the sample) coincides with the reference surface of the sample holder, to obtain a measurement sample.

The obtained measurement sample is set in an X-ray diffractometer (X-ray diffractometer Ultima IV manufactured by Rigaku Corporation), and the X-ray diffraction pattern is measured at ambient temperature using Cu-Kα as the X-ray source, a standard sample stage as the sample stage, the focusing method as the optical system, a semiconductor detector (D/teX Ultra) as the detector, and a scattering prevention tube (slit width: 4 mm, length: about 9 cm) with a measurement angle range of $2\theta = 10°$ to 70°, a sampling width of 0.02°, and a scanning speed of 5°/min.

<Calculation of Full Width at Half Maximum, Crystallite Size, and Peak Height Ratio>

For the calculation of the full width at half maximum and the crystallite size, comprehensive powder X-ray diffraction pattern analysis software JADE 9 is used.

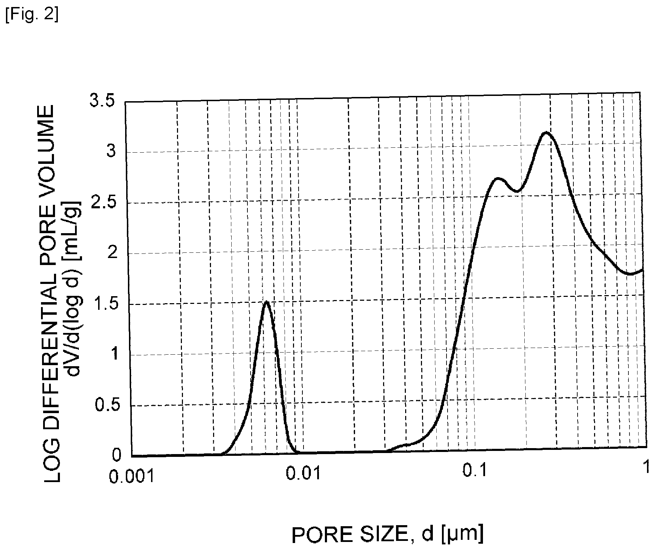

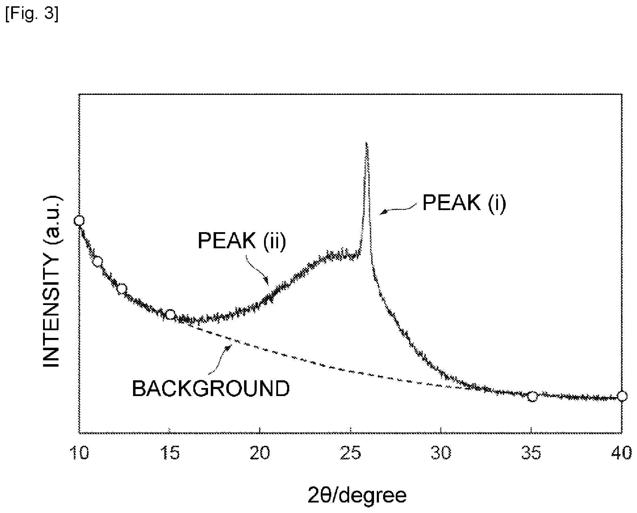

Assuming that the peak (i) and the peak (ii) are present in the range of 2θ = 10° to 40° in the X-ray diffraction pattern, peak separation is performed to calculate the full width at half maximum (measured β) derived from the Cu-Kα₁ line as well as the peak position 2θ (°) and the peak height of the peak (i) and the peak (ii). However, when a sharp peak (i) is not observed in the X-ray diffraction pattern, peak separation is performed assuming that only the peak (ii) is present. In this case, the peak shape is set to a pseudo-Voigt function and the background shape is set to a cubic spline (fixed). The background is subtracted by manually specifying six points as connection points (for example, in Figure 3, 2θ = 10°, 11°, 12.3°, 15°, 35°, and 40°).

When calculating the full width at half maximum and the crystallite size, correction of the full width at half maximum derived from the instrument is performed with the method below. Specifically, the same measurement as that above under <Measurement of X-Ray Diffraction Pattern> is performed for Si powder (NIST SRM 640c), and whole powder pattern fitting (WPPF) is performed on the measurement results using JADE 9 to determine the full-width-at-half-maximum curve for Si. Using the obtained full-width-at-half-maximum curve for Si, the full width at half maximum of Si at the peak position 2θ of the peak (i) in the porous carbon material is determined, and this is used as the instrument-derived full width at half maximum ($\beta_{instrument}$) corresponding to the peak (i). This value is substituted into the equation below and correction is performed to calculate the sample-derived full width at half maximum ($\beta_{sample}$) of the peak (i). Similarly, in the case of the peak (ii), the full width at half maximum of Si at the peak position 2θ of the peak (ii) is determined, and this is used as the instrument-derived full width at half maximum ($\beta_{instrument}$) corresponding to the peak (ii). This value is substituted into the equation below and correction is performed to calculate the sample-derived full width at half maximum ($\beta_{sample}$) of the peak (ii).

$$(\beta_{sample})^2 = [(\beta_{observed})^2 - (\beta_{instrument})^2]$$

Next, the full width at half maximum ($\beta_{sample}$) of the peak (i) is substituted into the Scherrer equation below to calculate the crystallite size. At this time, the Scherrer constant K is set to 1, the wavelength λ of the X-rays used for measurement is set to 0.154 nm, and the peak position of the peak (i) determined through peak separation using JADE 9 is used as the value of the diffraction angle 2θ (°).

$$\text{crystallite size} = (K \times \lambda) / (\beta \times \cos\theta)$$

The peak height ratio is calculated by substituting the peak height of the peak (i) and the peak height of the peak (ii) determined by the peak separation above into the equation below.

$$\text{(peak height ratio)} = \text{(peak height of peak (i)) / (peak height of peak (ii))}$$

In a nitrogen adsorption measurement, the porous carbon material of the present embodiment may have a nitrogen adsorption amount at a relative pressure ($P/P_0$) of 0.2 of, for example, 10 to 250 cm³/g.

A porous carbon material with a low nitrogen adsorption amount at a relative pressure ($P/P_0$) of 0.2 can be regarded as a porous carbon material having few micropores. A porous carbon material that has the above-described nitrogen adsorption amount of 250 cm³/g or less has fewer fine pores that are likely to become a starting point for degradation, and therefore tends to have better oxidation resistance. In addition, a porous carbon material that has the above-described nitrogen adsorption amount of 10 cm³/g or more tends to be more suitable as a catalyst support because the presence of fine pores makes it easier for a catalyst to be supported. Such a porous carbon material can be formed by a heat treatment step that includes heat treatment at 1500 °C or higher, as indicated for example in the production method discussed below.

The nitrogen adsorption amount at a relative pressure ($P/P_0$) of 0.2 may be, for example, 250 cm³/g or less, and from the viewpoint of the effects above being exhibited more significantly, may be 200 cm³/g or less, 170 cm³/g or less, 150 cm³/g or less, 130 cm³/g or less, or 110 cm³/g or less.

The nitrogen adsorption amount at a relative pressure ($P/P_0$) of 0.2 may be, for example, 10 cm³/g or more, and from the viewpoint of the effects above being exhibited more significantly, may be 20 cm³/g or more, 30 cm³/g or more, 40 cm³/g or more, or 50 cm³/g or more.

In the porous carbon material of the present embodiment, the ratio ($N_1/N_0$) of the nitrogen adsorption amount ($N_1$) at a relative pressure ($P/P_0$) of 0.2 to the nitrogen adsorption amount ($N_0$) at a relative pressure ($P/P_0$) of 0.8 may be, for example, 0.6 or less, and from the viewpoint of the effects above being exhibited more significantly, may be 0.5 or less or 0.4 or less.

Note that herein, the nitrogen adsorption amount of the porous carbon material is measured by the method below.

<Measurement of Nitrogen Adsorption Amount>

The porous carbon material is dried for three hours at 300 °C under vacuum using a pretreatment device (BELPREP VAC II manufactured by MicrotracBEL Corp.). Next, a nitrogen adsorption isotherm is measured using a high-precision gas/vapor adsorption amount measuring device (BELSORP MAX II manufactured by MicrotracBEL Corp.). Then, the nitrogen adsorption amount at a predetermined relative pressure is calculated from the obtained nitrogen adsorption isotherm.

The porous carbon material of the present embodiment may have a surface oxygen concentration measured by XPS of 2.5 at% or less.

A porous carbon material with a low surface oxygen concentration can be regarded as a porous carbon material having a small amount of surface functional groups. When the surface oxygen concentration is low, the amount of surface functional groups of the porous carbon material is small, and the surface of the porous carbon material becomes more hydrophobic. This makes it easier for reaction products to be discharged from the interior of the porous carbon material when the porous carbon material is used as a catalyst support. Such a porous carbon material can be formed by a heat treatment step that includes heat treatment at 1500 °C or higher, as indicated for example in the production method discussed below.

The surface oxygen concentration of the porous carbon material of the present embodiment may be, for example, 2.5 at% or less, and from the viewpoint of the effects above being exhibited more significantly, may be 2 at% or less, 1.5 at% or less, 1 at% or less, or 0.5 at% or less. The lower limit of the surface oxygen concentration of the porous carbon material of the present embodiment is not particularly limited, and may be 0 at%.

The porous carbon material of the present embodiment may have a surface carbon concentration measured by XPS of 95 at% or more.

A porous carbon material with a high surface carbon concentration can be regarded as a porous carbon material having a small amount of surface functional groups. When the surface carbon concentration is high, the amount of surface functional groups in the porous carbon material is small, and the surface of the porous carbon material becomes more hydrophobic. This makes it easier for reaction products to be discharged from the interior of the porous carbon material when the porous carbon material is used as a catalyst support. Such a porous carbon material can be formed by a heat treatment step that includes heat treatment at 1500 °C or higher, as indicated for example in the production method discussed below.

The surface carbon concentration of the porous carbon material of the present embodiment may be, for example, 95 at% or more, and from the viewpoint of the effects above being exhibited more significantly, may be 97.5 at% or more, 98 at% or more, 98.5 at% or more, 99 at% or more, or 99.5 at% or more. The upper limit of the surface carbon concentration of the porous carbon material of the present embodiment is not particularly limited, and may be 100 at%.

In the porous carbon material of the present embodiment, the sum of the surface oxygen concentration and the surface carbon concentration is 100 at%. For example, when the surface oxygen concentration is 2 at%, the surface carbon concentration is 98 at%.

Note that herein, the surface oxygen concentration and the surface carbon concentration of the porous carbon material are measured by the method below.

<Measurement of Surface Oxygen Concentration and Surface Carbon Concentration>

The surface oxygen concentration and the surface carbon concentration are determined through XPS measurement using an X-ray photoelectron spectrometer (K-Alpha X-ray photoelectron spectrometer manufactured by Thermo Fisher Scientific K.K.).

Specifically, the porous carbon material is packed in the recessed portion ($\varphi$3 mm $\times$ 1 mm thickness) of a powder sample holder, the sample surface is compressed flat, and then the sample is subjected to measurement. The excitation source used for measurement is Al-K$\alpha$ with a monochromator, the X-ray irradiation area is set to 400 $\times$ 200 $\mu$m (elliptical in shape), the detection angle is set to 90° (perpendicular to the sample surface), the pass energy is set to 50 eV, and the number of scans is set to five. The elements to be detected are oxygen (O) and carbon (C), and narrow spectra of these elements are measured. Integration is performed in the O1s range (about 540 to 527 eV) for O and in the C1s range (about 293 to 280 eV) for C to calculate the surface oxygen concentration and the surface carbon concentration. At this time, charge correction is performed using the C1s peak (284.8 eV) as the reference peak, and the background is specified as the Shirley background. In addition, normalization is performed such that the sum of the surface oxygen concentration and the surface carbon concentration becomes 100 at%.

The specific surface area of the porous carbon material of the present embodiment may be, for example, 200 $m^2$/g or more, and may be 250 $m^2$/g or more, 300 $m^2$/g or more, or 350 $m^2$/g or more. As a result, when an active metal is supported, the dispersibility of the active metal on the porous carbon material improves, and reaction sites tend to be formed more efficiently. In addition, the specific surface area of the porous carbon material of the present embodiment may be, for example, 1800 m$^2$/g or less, and may be 1500 m$^2$/g or less, 1000 m$^2$/g or less, 700 m$^2$/g or less, or 500 m$^2$/g or less. This further improves the strength of the porous structure of the porous carbon material, and the porous structure tends to become more stable.

Note that herein, the specific surface area of the porous carbon material refers to a value measured by the nitrogen adsorption method. More specifically, the specific surface area is measured by the method below in accordance with JIS Z 8830.

<Measurement of Specific Surface Area>

The porous carbon material is dried for three hours at 300 °C under vacuum using a pretreatment device (BELPREP VAC II manufactured by MicrotracBEL Corp.). Next, a nitrogen adsorption isotherm is measured using a high-precision gas/vapor adsorption amount measuring device (BELSORP MAX II manufactured by MicrotracBEL Corp.). Then, the specific surface area is calculated using the BET method from the obtained nitrogen adsorption isotherm.

The porous carbon material of the present embodiment may include, for example, a heat-treated product of a resin material. The porous carbon material of the present embodiment may be, for example, a heat-treated product of a resin-molded article containing a resin material.

The resin material may be any material that can form amorphous carbon through heat treatment. Examples of the resin material include phenolic resins (novolac-type phenolic resins and resol-type phenolic resins), furan resins, epoxy resins, unsaturated polyester resins, ester resins, urea resins, melamine resins, alkyd resins, xylene resins, polyurethane resins, polyurea resins, acrylonitrile resins, polystyrene resins, bismaleimide-triazine resins, divinylbenzene resins, polyimide resins, diallyl phthalate resins, and vinyl ester resins.

As the resin material, a polymer of a phenolic compound and formaldehyde can be suitably used.

Phenolic compounds are compounds having at least one hydroxyl group bonded to an aromatic ring. Examples of phenolic compounds include phenol, o-cresol, m-cresol, p-cresol, dihydroxybenzene (1,2-dihydroxybenzene (catechol), 1,3-dihydroxybenzene (resorcinol), 1,4-dihydroxybenzene (hydroquinone)), 5-methylresorcinol (orcinol), urushiol, pyrogallol, phloroglucinol, hydroxyhydroquinone, hydroxynaphthalene, hydroxyanthracene, hydroxypyridine, and furfuryl alcohol. As the phenolic compound, phenol, resorcinol, phloroglucinol, 1,5-dihydroxynaphthalene and furfuryl alcohol are preferable, and resorcinol is more preferable. A single phenolic compound may be used alone, or two or more may be used in combination.

The polymer above may be a polymer obtained by reacting a phenolic compound with formaldehyde, or by reacting a phenolic compound with a polymer of formaldehyde (for example, paraformaldehyde).

The polymer above may be a polymer obtained by using an acid catalyst or a polymer obtained by using a base catalyst, but a polymer obtained by using an acid catalyst is preferred.

The heat-treated product of the resin material may be any product obtained by heat-treating the resin material under conditions in which amorphous carbon is formed. By appropriately modifying the heat treatment conditions as discussed below, it is possible to obtain a porous carbon material having the characteristics discussed above.

The porous carbon material of the present embodiment can be produced, for example, by the production method below.

(Production Method for Porous Carbon Material)

A method for producing the porous carbon material of the present embodiment includes a preparation step of preparing a resin-molded article containing a resin material serving as a carbon source, a first template, and a second template, and a heat treatment step of obtaining a porous carbon material by heat-treating the resin-molded article.

In the present embodiment, the first template includes amphiphilic molecules, and the second template includes latex particles. In addition, in the present embodiment, the heat treatment step includes heat treatment at 1500 °C or higher.

According to the production method of the present embodiment, a first pore group is formed by the first template, and a second pore group is formed by the second template. In addition, according to the production method of the present embodiment, by the heat treatment step including heat treatment at 1500 °C or higher, it becomes easier to obtain a porous carbon material that satisfies the requirements regarding the peak (i) discussed above. For this reason, the production method of the present embodiment enables the porous carbon material of the present embodiment to be easily produced.

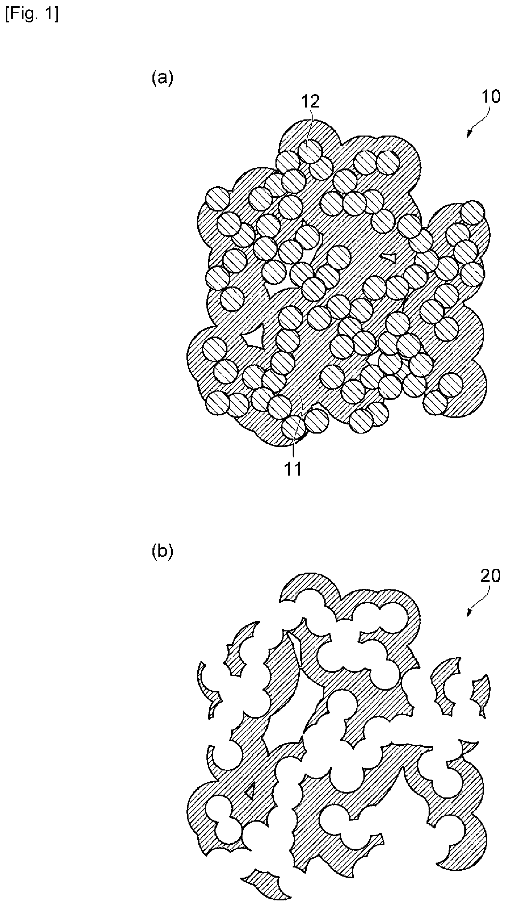

Figure 1(a) is a section view schematically showing one example of the resin-molded article, and Figure 1(b) is a section view schematically showing one example of the porous carbon material.

A resin-molded article 10 shown in Figure 1(a) contains a resin material 11 and latex particles 12. In addition, the resin material 11 includes micelles (not shown) of the amphiphilic molecules. When such a resin-molded article 10 is heat-treated, the micelles in the resin material 11 are burned off, resulting in the formation of micropores corresponding to the first pore group, and the burning off of the latex particles 12 creates voids, thereby forming a branch-like higher-order structure.

A porous carbon material 20 shown in Figure 1(b) has a higher-order structure formed by the burning off of the latex particles 12, and micropores are formed in the porous carbon material 20 by the burning off of the micelles. Such a porous carbon material 20 has a first peak attributable to micropores and a second peak attributable to the higher-order structure in the pore size distribution.

The steps of the production method of the present embodiment will be discussed in detail below.

In the preparation step, a resin-molded article containing a resin material serving as a carbon source, a first template, and a second template is prepared.

The resin material may be any material that can form amorphous carbon through heat treatment. Examples of the resin material include those described above.

The first template may be any template that includes amphiphilic molecules and is capable of forming the first pore group forming the first peak.

The amphiphilic molecules are preferably molecules capable of forming micelles in water. According to such amphiphilic molecules, it is possible to easily obtain a resin-molded article containing the first template by dispersing the formed micelles in the resin material.

As the amphiphilic molecules, any known molecules capable of forming micelles in water may be used without particular limitations. Examples of amphiphilic molecules include diblock copolymers having a hydrophilic block-hydrophobic block structure, triblock copolymers having a hydrophilic block-hydrophobic block-hydrophilic block structure, and triblock copolymers having a hydrophobic block-hydrophilic block-hydrophobic block structure.

Examples of hydrophilic blocks include a polyethylene oxide block, a polyvinylpyridine block, and a polymethyl methacrylate block. Among these, a polyethylene oxide block is preferred. The number of ethylene oxide units in the polyethylene oxide block is preferably 20 to 150, more preferably 90 to 120. That is, the number of ethylene oxide units in the polyethylene oxide block may be, for example, 20 to 150, 20 to 120, 90 to 150, or 90 to 120.

Examples of hydrophobic blocks include a polypropylene oxide block, a hydrocarbon block, and a polystyrene block. Among these, a polypropylene oxide block is preferred. The number of propylene oxide units in the polypropylene oxide block is preferably 30 to 100, more preferably 60 to 80. That is, the number of propylene oxide units in the polypropylene oxide block may be, for example, 30 to 100, 30 to 80, 60 to 100, or 60 to 80.

As the amphiphilic molecules, a polyethylene oxide-polypropylene oxide-polyethylene oxide triblock copolymer is preferable.

In the present embodiment, the pore size of the first pore group (that is, the peak position of the first peak) can be adjusted by adjusting the particle size of the micelles formed by the amphiphilic molecules. In other words, the amphiphilic molecules may be molecules capable of forming micelles as a template (first template) forming a pore group (first pore group) forming a peak (first peak) in a pore size range of 3 nm or more and less than 10 nm.

The second template may be any template that includes latex particles and is capable of forming the second pore group forming the second peak.

The average particle size of the latex particles is not particularly limited so long as, for example, the average particle size is within a range that enables the second pore group to be formed, and may be, for example, 50 nm or more, preferably 100 nm or more. In addition, the average particle size of the latex particles may be, for example, 5 $\mu$m or less, preferably 1 $\mu$m or less. Note that herein, the average particle size of the latex particles refers to the value of the median diameter measured by a laser diffraction/scattering method. That is, the average particle size of the latex particles may be, for example, 50 nm to 5 $\mu$m, 50 nm to 1 $\mu$m, 100 nm to 5 $\mu$m, or 100 nm to 1 $\mu$m.

In the present embodiment, the pore size of the second pore group (that is, the peak position of the second peak) can be adjusted by adjusting the particle size of the latex particles. In other words, the latex particles may be particles that function as a template (second template) forming a pore group (second pore group) forming a peak (second peak) in a pore size range of 10 nm or more and 1 $\mu$m or less.

The resin constituting the latex particles is not particularly limited, and may be any resin that is burned off during heat treatment of the resin-molded article. Examples of the resin constituting the latex particles include polystyrene resins and polymethyl methacrylate resins.

In the preparation step, the amount of the first template to be blended may be, for example, 30 parts by mass or more, preferably 40 parts by mass or more, and more preferably 50 parts by mass or more with respect to 100 parts by mass of the resin material. In addition, in the preparation step, the amount of the first template to be blended may be, for example, 140 parts by mass or less, preferably 120 parts by mass or less, and more preferably 100 parts by mass or less with respect to 100 parts by mass of the resin material. That is, the amount of the first template to be blended in the preparation step may be, for example, 30 to 140 parts by mass, 30 to 120 parts by mass, 30 to 100 parts by mass, 40 to 140 parts by mass, 40 to 120 parts by mass, 40 to 100 parts by mass, 50 to 140 parts by mass, 50 to 120 parts by mass, or 50 to 100 parts by mass with respect to 100 parts by mass of the resin material.

By adjusting the amount of the first template to be blended, the pore volume of pores having a pore size of 3 nm or more and less than 10 nm can be adjusted. That is, in the present embodiment, the amount of the first template to be blended may be appropriately adjusted such that the pore volume of pores having a pore size of 3 nm or more and less than 10 nm in the porous carbon material is within the preferred range discussed above.

In the preparation step, the amount of the second template to be blended may be, for example, 50 parts by mass or more, and is preferably 100 parts by mass or more with respect to 100 parts by mass of the resin material. In addition, in the preparation step, the amount of the second template to be blended may be, for example, 1500 parts by mass or less, and is preferably 1000 parts by mass or less with respect to 100 parts by mass of the resin material. That is, the amount of the second template to be blended in the preparation step may be, for example, 50 to 1500 parts by mass, 50 to 1000 parts by mass, 100 to 1500 parts by mass, or 100 to 1000 parts by mass with respect to 100 parts by mass of the resin material.

By adjusting the amount of the second template to be blended, the pore volume of pores having a pore size of 10 nm or more and 1 $\mu$m or less can be adjusted. That is, in the present embodiment, the amount of the second template to be blended may be appropriately adjusted such that the pore volume of pores having a pore size of 10 nm or more and 1 $\mu$m or less in the porous carbon material is within the preferred range discussed above.

In one preferred aspect (hereinafter the first aspect), the preparation step may include: a resin material formation step of forming a resin material in a dispersion containing micelles formed by amphiphilic molecules, latex particles, and an aqueous solvent to obtain a precipitate containing the micelles, the latex particles, and the resin material; and a drying step of drying the precipitate to obtain a resin-molded article containing the resin material, the amphiphilic molecules, and the latex particles.

In the resin material formation step, for example, the resin material may be formed from a precursor of the resin material in the dispersion. Here, the precursor of the resin material may be, for example, a monomer that forms the resin material by polymerization or a polymer that forms the resin material by modification.

The aqueous solvent is a solvent that contains water and may further contain an organic solvent that is compatible with water. Examples of the organic solvent include alcohols such as methanol, ethanol, 1-propanol, and 2-propanol.

The resin material formation step may be, for example, a step of polymerizing a phenolic compound and formaldehyde in the dispersion to obtain a precipitate containing a polymer of the phenolic compound and formaldehyde, micelles, and latex particles.

The polymerization of the phenolic compound and the formaldehyde may be carried out in the presence of a polymerization catalyst. The polymerization catalyst may be an acid catalyst or a base catalyst and an acid catalyst is preferred. That is, the dispersion may contain a polymerization catalyst (acid catalyst or base catalyst) and preferably contains an acid catalyst.

Examples of the acid catalyst include hydrochloric acid, acetic acid, oxalic acid, and sulfonic acid. Examples of the base catalyst include sodium hydroxide, ammonia, and amines.

The ratio $C_1/C_2$ of the amount $C_1$ (mol) of a phenolic compound to the amount $C_2$ (mol) of formaldehyde supplied to the dispersion may be, for example, 0.1 or more, preferably 0.3 or more. In addition, the ratio $C_1/C_2$ may be, for example, 1.0 or less, and is 0.9 or less. That is, the ratio $C_1/C_2$ may be, for example, 0.1 to 1.0, 0.1 to 0.9, 0.3 to 1.0, or 0.3 to 0.9.

The reaction conditions for the polymerization of the phenolic compound and formaldehyde are not particularly limited. For example, the reaction temperature may be 20 to 80 °C and the reaction time may be 10 minutes to 96 hours.

In the drying step, the precipitate is collected and the aqueous solvent is removed to obtain a resin-molded article. In the drying step, the drying conditions are not particularly limited. For example, the drying temperature may be 20 to 80 °C.

In another preferred aspect (second aspect), the preparation step may include: an impregnation step of impregnating a mass of latex particles with a dispersion containing micelles formed by amphiphilic molecules, a resin material (or precursor thereof), and an aqueous solvent; and a drying step of removing the aqueous solvent.

The mass of latex particles may be a body in which latex particles are randomly aggregated or a body in which latex particles are regularly arranged. The mass of latex particles may be, for example, a colloidal crystal.

The impregnation step may be, for example, a step of impregnating the mass of latex particles with a dispersion containing micelles, a phenolic compound, formaldehyde, and an aqueous solvent.

The dispersion may further contain a polymerization catalyst (acid catalyst or base catalyst) and preferably further contains an acid catalyst.

The ratio $C_1/C_2$ of the amount $C_1$ (mol) of the phenolic compound to the amount $C_2$ (mol) of formaldehyde supplied to the dispersion may be the same as that in the first aspect.

In the second aspect, the drying step may be a step of removing the aqueous solvent, or may be a step of forming a resin material from a precursor of the resin material and removing the aqueous solvent.

For example, the drying step may be a step of obtaining a resin-molded article containing a polymer of the phenolic compound and formaldehyde, the mass of latex particles, and the micelles of amphiphilic molecules by the polymerization of the phenolic compound and formaldehyde and the removal of the aqueous solvent.

The heat treatment step is a step of obtaining a porous carbon material by heat-treating the resin-molded article.

The heat treatment step may include, for example, a first heat treatment step in which heat treatment is performed at a heat treatment temperature of less than 1200 °C, and a second heat treatment step in which heat treatment is performed at a heat treatment temperature of 1500 °C or higher.

The first heat treatment step may be a step of obtaining a first heat-treated body by heat-treating the resin-molded article. The heat treatment in the first heat treatment step (hereinafter heat treatment (i)) may be heat treatment performed under conditions that enable the resin material in the resin-molded article to form amorphous carbon and in which the heat treatment temperature is less than 1200 °C.

The heat treatment temperature in the heat treatment (i) may be any temperature that enables the resin material in the resin-molded article to form amorphous carbon. For example, the heat treatment temperature may be 400 °C or higher, and may be 600 °C or higher or 800 °C or higher. In addition, the heat treatment temperature in the heat treatment (i) is less than 1200 °C, and may be 1100 °C or lower or 1000 °C or lower.

The heat treatment time (the time during which the object is maintained at the heat treatment temperature) in the heat treatment (i) is not particularly limited and may be, for example, 30 minutes or more, and may be one hour or more, two hours or more, or three hours or more. In addition, the heat treatment time in the heat treatment (i) may be, for example, seven hours or less, and may be six hours or less, five hours or less, or four hours or less.

The heat treatment (i) may be heat treatment in an inert gas atmosphere (such as a nitrogen atmosphere or an argon atmosphere).

The first heat-treated body obtained in the first heat treatment step may be a block-like porous carbon material. That is, in the first heat-treated body, amorphous carbon may be formed from the resin material, and the first template and the second template may be burned off.

The second heat treatment step may be a step of obtaining the porous carbon material of the present embodiment by heat-treating the first heat-treated body. The heat treatment in the second heat treatment step (hereinafter heat treatment (ii)) may be performed at a heat treatment temperature of 1500 °C or higher.

In addition, the heat treatment step may further include a pulverization step of pulverizing the first heat-treated body, and in this case, the second heat treatment step may be a step of obtaining the porous carbon material of the present embodiment by heat-treating a pulverized product of the first heat-treated body. The pulverization method is not particularly limited and may be, for example, pulverization using a mortar. The degree of pulverization may be appropriately modified in accordance with the application of the porous carbon material and the like.

The heat treatment temperature in the heat treatment (ii) is 1500 °C or higher, and from the viewpoint of more easily obtaining a porous carbon material that satisfies the characteristics discussed above, the heat treatment temperature may be 1600 °C or higher, 1700 °C or higher, 1800 °C or higher, 1900 °C or higher, or 2000 °C or higher. The heat treatment temperature in the heat treatment (ii) may be, for example, 3000 °C or lower, and may be 2900 °C or lower, 2800 °C or lower, or 2700 °C or lower.

The heat treatment temperature (the time during which the object is maintained at the heat treatment temperature) in the heat treatment (ii) is not particularly limited and may be, for example, 0.5 hours or more, and may be one hour or more, two hours or more, or three hours or more. In addition, the heat treatment temperature in the heat treatment (ii) may be, for example, seven hours or less, and may be six hours or less, five hours or less, or four hours or less.

The heat treatment (ii) may be heat treatment in an inert gas atmosphere (such as a nitrogen atmosphere or an argon atmosphere) and, particularly when the heat treatment temperature is 2000 °C or higher, may be heat treatment in an argon atmosphere from the viewpoint of suppressing gas reactions.

The applications of the porous carbon material of the present embodiment are not particularly limited. The porous carbon material of the present embodiment may be used for known applications of carbon materials without particular limitations.

The porous carbon material of the present embodiment enables the reaction sites to effectively function even when coated with a coating material, and thus can be particularly suitably used for applications in which the porous carbon material is coated with a coating material.

For example, the porous carbon material of the present embodiment can be suitably used as a cathode catalyst support for polymer electrolyte fuel cells. A cathode catalyst is used by supporting an active metal (such as platinum) on a porous carbon material and coating the material with an ionomer. According to the porous carbon material of the present embodiment, the active metal supported inside the first pore group can sufficiently exhibit catalytic ability without being poisoned by the ionomer.

In addition, the porous carbon material of the present embodiment can also suitably be used in applications such as electrode materials for capacitors, electrode materials for secondary batteries, and gas adsorption materials.

The porous carbon material of the present embodiment has excellent oxidation resistance. Oxidation resistance can be evaluated by, for example, the 5% weight loss temperature. The 5% weight loss temperature of the porous carbon material of the present embodiment may be, for example, 500 °C or higher, and may be 550 °C or higher, 600 °C or higher, 620 °C or higher, or 650 °C or higher.

Note that herein, the 5% weight loss temperature of the porous carbon material is measured by the method below.

<Measurement of 5% Weight Loss Temperature>

After weighing about 5 mg of the porous carbon material, the sample is set in a thermogravimetric and differential thermal measurement device (STA 2500 manufactured by NETZSCH Japan K.K.), and the weight loss from 25 to 1000 °C is measured under a stream of air at 20 mL/min at a temperature-increasing rate of 10 °C/min. The weight at 25 °C in the obtained weight curve is defined as 100%, and the temperature at the point when the weight has decreased by 5% is defined as the 5% weight loss temperature.

[Porous Carbon Material Satisfying (B)]

The porous carbon material of the present embodiment has a first peak positioned in a pore size range of 3 nm or more and less than 10 nm and a second peak positioned in a pore size range of 10 nm or more and 1 $\mu$m or less in a pore size distribution measured by mercury intrusion porosimetry. Note that "having a peak in a pore size range of $A_1$ to $A_2$ in a pore size distribution" means that a peak having a peak top in a pore size range of $A_1$ to $A_2$ is present in the pore size distribution curve.

The porous carbon material of the present embodiment can be regarded as having a first pore group forming the first peak and a second pore group forming the second peak. In addition, the porous carbon material of the present embodiment can also be regarded as having a microstructure formed by the first pore group and a higher-order structure formed by the second pore group.

In the porous carbon material of the present embodiment, because a reaction substrate can efficiently move through large voids in the higher-order structure, it is possible to efficiently transport the reaction substrate to a reaction site and efficiently discharge a reaction product. In addition, the porous carbon material of the present embodiment has the first pore group, which makes it possible to achieve a high specific surface area and efficiently support an active metal. Furthermore, in the present embodiment, by coating with a coating material along the higher-order structure, it is possible to provide the coating material on the porous carbon material without poisoning or burying the active metal supported in the microstructure. Thus, according to the porous carbon material of the present embodiment, the reaction substrate can easily reach the reaction site and, even when coated with the coating material, the reaction site can effectively function. For this reason, the porous carbon material of the present embodiment is suitable as a catalyst support.

The first peak is positioned in a pore size range of 3 nm or more and less than 10 nm, and is preferably positioned in a pore size range of 4 nm or more and 7 nm or less. The second peak is positioned in a pore size range of 10 nm or more and 1 $\mu$m or less, and is preferably positioned in a pore size range of 20 nm or more and 200 nm or less. As a result, the effects discussed above are more significantly exhibited.

The first peak and the second peak may each be a peak having a peak value of 0.1 mL/g or more, and are preferably peaks having a peak value of 0.5 mL/g or more. In addition, the first peak and the second peak may each have a peak value of 4 mL/g or less, and may have a peak value of 2 mL/g or less.

The first peak and the second peak are preferably the peak having the highest peak value (peak A) or the peak having the second highest peak value (peak B) among the peaks positioned in a pore size range of 3 nm or more and 1 $\mu$m or less. That is, when the first peak is peak A, the second peak is preferably peak B, and when the first peak is peak B, the second peak is preferably peak A.

Note that herein, the pore size distribution of the porous carbon material is measured by mercury intrusion porosimetry. More specifically, the pore size distribution is measured with the method below.

In addition, the pore size distribution is represented by a pore size distribution curve with the horizontal axis indicating the pore size (pore diameter) (logarithmic scale) and the vertical axis indicating the log differential pore volume (linear scale).

<Measurement of Pore Size Distribution>

First, 40 to 80 mg of the porous carbon material is collected in a 5 cc measurement cell. Next, using an automatic mercury porosimeter (AutoPore V 9620 manufactured by Micromeritics Instrument Corporation-Shimadzu Corporation), the mercury pressure is raised from 1 psia to 60,000 psia, and the amount of mercury intrusion is measured. Then, the pore size distribution is determined from the curve that is obtained from the pressure and amount of intrusion. The mercury contact angle is set to 130 degrees, and the mercury surface tension is set to 485 dynes/cm.

The porous carbon material of the present embodiment has a nitrogen adsorption amount at a relative pressure $(P/P_0)$ of 0.2 of 10 $cm^3$/g or more and 250 $cm^3$/g or less in a nitrogen adsorption measurement.

A porous carbon material with a low nitrogen adsorption amount at a relative pressure $(P/P_0)$ of 0.2 can be regarded as a porous carbon material having few micropores. In the present embodiment, when the nitrogen adsorption amount is 250 $cm^3$/g or less, there are fewer fine pores that are likely to become a starting point for degradation, and it is considered that excellent oxidation resistance is achieved. In addition, in the present embodiment, when the nitrogen adsorption amount is 10 $cm^3$/g or more, the presence of fine pores makes it easier for a catalyst to be supported, and it is considered that the material can be suitably used as a catalyst support. Such a porous carbon material can be formed by, for example, the production method discussed below.

The nitrogen adsorption amount at a relative pressure $(P/P_0)$ of 0.2 is 250 $cm^3/g$ or less, and from the viewpoint of the effects above being exhibited more significantly, may be 200 $cm^3/g$ or less, 180 $cm^3/g$ or less, 170 $cm^3/g$ or less, 160 $cm^3/g$ or less, 150 $cm^3/g$ or less, 140 $cm^3/g$ or less, 130 $cm^3/g$ or less, or 120 $cm^3/g$ or less.

The nitrogen adsorption amount at a relative pressure $(P/P_0)$ of 0.2 is 10 $cm^3/g$ or more, and from the viewpoint of the effects above being exhibited more significantly, may be 20 $cm^3/g$ or more, 30 $cm^3/g$ or more, 40 $cm^3/g$ or more, or 50 $cm^3/g$ or more.

In the porous carbon material of the present embodiment, the ratio $(N_1/N_0)$ of the nitrogen adsorption amount $(N_1)$ at a relative pressure $(P/P_0)$ of 0.2 to the nitrogen adsorption amount $(N_0)$ at a relative pressure $(P/P_0)$ of 0.8 may be, for example, 0.6 or less, and from the viewpoint of the effects discussed above being exhibited more significantly, may be 0.5 or less or 0.4 or less.

Note that herein, the nitrogen adsorption amount of the porous carbon material is measured by the method below.

<Measurement of Nitrogen Adsorption Amount>

The porous carbon material is dried for three hours at 300 °C under vacuum using a pretreatment device (BELPREP VAC II manufactured by MicrotracBEL Corp.). Next, a nitrogen adsorption isotherm is measured using a high-precision gas/vapor adsorption amount measuring device (BELSORP MAX II manufactured by MicrotracBEL Corp.). Then, the nitrogen adsorption amount at a predetermined relative pressure is calculated from the obtained nitrogen adsorption isotherm.

The porous carbon material of the present embodiment may have a peak (i) that has a full width at half maximum of 0.6° or less and a peak top within the range of $2\theta$ = 25° to 27° in an X-ray diffraction pattern.

It can be concluded that regions with high crystallinity are formed in some portions of the porous carbon material having the peak (i) above. Better oxidation resistance is achieved as a result of the porous carbon material having regions with high crystallinity. Such a porous carbon material can be formed by a heat treatment step that includes heat treatment at 1100 °C or higher, as indicated for example in the production method discussed below.

The full width at half maximum of the peak (i) may be, for example, 0.6° or less, and may be 0.5° or less, 0.4° or less, or 0.3° or less. In addition, the full width at half maximum of the peak (i) may be, for example, 0.1° or more, 0.2° or more, or 0.3° or more.

The crystallite size of the peak (i) may be, for example, 60 nm or less, 55 nm or less, 50 nm or less, or 45 nm or less. In addition, the crystallite size of the peak (i) may be, for example, 20 nm or more.

The porous carbon material of the present embodiment may further have a peak (ii) that has a full width at half maximum of 9° or less and partially overlaps with the peak (i) in an X-ray diffraction pattern. That is, it can be concluded that the peak (i) is a peak present at a position coinciding with the peak (ii). The full width at half maximum of the peak (ii) may be, for example, 8.5° or less. In addition, the full width at half maximum of the peak (ii) may be, for example, 1.0° or more, 4.0° or more, or 7.0° or more.

The peak height ratio of the peak (i) to the peak (ii) may be, for example, 0.1 or more, 0.2 or more, or 0.3 or more. In addition, the peak height ratio of the peak (i) to the peak (ii) may be, for example, 5.0 or less, 3.0 or less, or 1.5 or less.

Note that herein, the X-ray diffraction pattern of the porous carbon material is measured by the method below.

<Measurement of X-Ray Diffraction Pattern>

The porous carbon material is placed on an Si zero-background sample holder (filling section: 20 mm × 18 mm × 0.2 mm thickness) and spread out with a glass plate such that the sample surface (height of the portion filled with the sample) coincides with the reference surface of the sample holder, to obtain a measurement sample.

The obtained measurement sample is set in an X-ray diffractometer (X-ray diffractometer Ultima IV manufactured by Rigaku Corporation), and the X-ray diffraction pattern is measured at ambient temperature using Cu-K$\alpha$ as the X-ray source, a standard sample stage as the sample stage, the focusing method as the optical system, a semiconductor detector (D/teX Ultra) as the detector, and a scattering prevention tube (slit width: 4 mm, length: about 9 cm) with a measurement angle range of $2\theta$ = 10° to 70°, a sampling width of 0.02°, and a scanning speed of 5°/min.

<Calculation of Full Width at Half Maximum, Crystallite Size, and Peak Height Ratio>

For the calculation of the full width at half maximum and the crystallite size, comprehensive powder X-ray diffraction pattern analysis software JADE 9 is used.

Assuming that the peak (i) and the peak (ii) are present in the range of $2\theta$ = 10° to 40° in the X-ray diffraction pattern, peak separation is performed to calculate the full width at half maximum (measured $\beta$) derived from the Cu-K$\alpha_1$ line

as well as the peak position 2θ (°) and the peak height of the peak (i) and the peak (ii). However, when a sharp peak (i) is not observed in the X-ray diffraction pattern, peak separation is performed assuming that only the peak (ii) is present. In this case, the peak shape is set to a pseudo-Voigt function and the background shape is set to a cubic spline (fixed). The background is subtracted by manually specifying six points as connection points (for example, in Figure 3, 2θ = 10°, 11°, 12.3°, 15°, 35°, and 40°).

When calculating the full width at half maximum and the crystallite size, correction of the full width at half maximum derived from the instrument is performed with the method below. Specifically, the same measurement as that above under <Measurement of X-Ray Diffraction Pattern> is performed for Si powder (NIST SRM 640c), and whole powder pattern fitting (WPPF) is performed on the measurement results using JADE 9 to obtain the full-width-at-half-maximum curve for Si. Using the obtained full-width-at-half-maximum curve for Si, the full width at half maximum of Si at the peak position 2θ of the peak (i) in the porous carbon material is determined, and this is used as the instrument-derived full width at half maximum ($\beta_{instrument}$) corresponding to the peak (i). This value is substituted into the equation below and correction is performed to calculate the sample-derived full width at half maximum ($\beta_{sample}$) of the peak (i). Similarly, in the case of the peak (ii), the full width at half maximum of Si at the peak position 2θ of the peak (ii) is determined, and this is used as the instrument-derived full width at half maximum ($\beta_{instrument}$) corresponding to the peak (ii). This value is substituted into the equation below and correction is performed to calculate the sample-derived full width at half maximum ($\beta_{sample}$) of the peak (ii).

$$(\beta_{sample})^2 = [(\beta_{observed})^2 - (\beta_{instrument})^2]$$

Next, the full width at half maximum ($\beta_{sample}$) of the peak (i) is substituted into the Scherrer equation below to calculate the crystallite size. At this time, the Scherrer constant K is set to 1, the wavelength λ of the X-rays used for measurement is set to 0.154 nm, and the peak position of the peak (i) determined through peak separation using JADE 9 is used as the value of the diffraction angle 2θ (°).

$$\text{crystallite size} = (K \times \lambda) / (\beta \times \cos\theta)$$

The peak height ratio is calculated by substituting the peak height of the peak (i) and the peak height of the peak (ii) determined by the peak separation above into the equation below.

$$(\text{peak height ratio}) = (\text{peak height of peak (i)} / (\text{peak height of peak (ii)})$$

The porous carbon material of the present embodiment may have a surface oxygen concentration measured by XPS of 6 at% or less.

A porous carbon material with a low surface oxygen concentration can be regarded as a porous carbon material having a small amount of surface functional groups. When the surface oxygen concentration is low, the amount of surface functional groups of the porous carbon material is small, and the surface of the porous carbon material becomes more hydrophobic. This makes it easier for reaction products to be discharged from the interior of the porous carbon material when the porous carbon material is used as a catalyst support. Such a porous carbon material can be formed by a heat treatment step that includes heat treatment at 1100 °C or higher, as indicated for example in the production method discussed below.

The surface oxygen concentration of the porous carbon material of the present embodiment may be, for example, 6 at% or less, and from the viewpoint of the effects above being exhibited more significantly, may be 4.5 at% or less, 3 at% or less, 2 at% or less, 1 at% or less, or 0.5 at% or less. The lower limit of the surface oxygen concentration of the porous carbon material of the present embodiment is not particularly limited, and may be 0 at%.

The porous carbon material of the present embodiment may have a surface carbon concentration measured by XPS of 94 at% or more.

A porous carbon material with a high surface carbon concentration can be regarded as a porous carbon material having a small amount of surface functional groups. When the surface carbon concentration is high, the amount of surface functional groups in the porous carbon material is small, and the surface of the porous carbon material becomes more hydrophobic. This makes it easier for reaction products to be discharged from the interior of the porous carbon material when the porous carbon material is used as a catalyst support. Such a porous carbon material can be formed by a heat treatment step that includes heat treatment at 1100 °C or higher, as indicated for example in the production method discussed below.

The surface carbon concentration of the porous carbon material of the present embodiment may be, for example, 94 at% or more, and from the viewpoint of the effects above being exhibited more significantly, may be 95.5 at% or more, 97 at% or more, 98 at% or more, 99 at% or more, or 99.5 at% or more. The upper limit of the surface carbon concentration of the porous carbon material of the present embodiment is not particularly limited, and may be 100 at%.

In the porous carbon material of the present embodiment, the sum of the surface oxygen concentration and the surface carbon concentration is 100 at%. For example, when the surface oxygen concentration is 2 at%, the surface carbon concentration is 98 at%.

Note that herein, the surface oxygen concentration and the surface carbon concentration of the porous carbon material are measured by the method below.

<Measurement of Surface Oxygen Concentration and Surface Carbon Concentration>

The surface oxygen concentration and the surface carbon concentration are determined through XPS measurement using an X-ray photoelectron spectrometer (K-Alpha X-ray photoelectron spectrometer manufactured by Thermo Fisher Scientific K.K.).

Specifically, the porous carbon material is packed in the recessed portion ($\varphi$3 mm $\times$ 1 mm thickness) of a powder sample holder, the sample surface is compressed flat, and then the sample is subjected to measurement. The excitation source used for measurement is Al-K$\alpha$ with a monochromator, the X-ray irradiation area is set to 400 $\times$ 200 $\mu$m (elliptical in shape), the detection angle is set to 90° (perpendicular to the sample surface), the pass energy is set to 50 eV, and the number of scans is set to five. The elements to be detected are oxygen (O) and carbon (C), and narrow spectra of these elements are measured. Integration is performed in the O1s range (about 540 to 527 eV) for O and in the C1s range (about 293 to 280 eV) for C to calculate the surface oxygen concentration and the surface carbon concentration. At this time, charge correction is performed using the C1s peak (284.8 eV) as the reference peak, and the background is specified as the Shirley background. In addition, normalization is performed such that the sum of the surface oxygen concentration and the surface carbon concentration becomes 100 at%.

The specific surface area of the porous carbon material of the present embodiment may be, for example, 200 $m^2$/g or more, and may be 250 $m^2$/g or more, 300 $m^2$/g or more, or 350 $m^2$/g or more. As a result, when an active metal is supported, the dispersibility of the active metal on the porous carbon material improves, and reaction sites tend to be formed more efficiently. In addition, the specific surface area of the porous carbon material of the present embodiment may be, for example, 1800 $m^2$/g or less, and may be 1500 $m^2$/g or less, 1000 $m^2$/g or less, 700 $m^2$/g or less, or 500 $m^2$/g or less. This further improves the strength of the porous structure of the porous carbon material, and the porous structure tends to become more stable.

Note that herein, the specific surface area of the porous carbon material refers to a value measured by the nitrogen adsorption method. More specifically, the specific surface area is measured by the method below in accordance with JIS Z 8830.

<Measurement of Specific Surface Area>

The porous carbon material is dried for three hours at 300 °C under vacuum using a pretreatment device (BELPREP VAC II manufactured by MicrotracBEL Corp.). Next, a nitrogen adsorption isotherm is measured using an automatic specific surface area measuring device (BELSORP MAX II manufactured by MicrotracBEL Corp.). Then, the specific surface area is calculated using the BET method from the obtained nitrogen adsorption isotherm.

The porous carbon material of the present embodiment may include, for example, a heat-treated product of a resin material. The porous carbon material of the present embodiment may be, for example, a heat-treated product of a resin-molded article containing a resin material.

The resin material may be any material that can form amorphous carbon through heat treatment. Examples of the resin material include the same resin materials as those in the descriptions regarding the porous carbon material satisfying (A) discussed above.

The heat-treated product of the resin material may be any product obtained by heat-treating the resin material under conditions in which amorphous carbon is formed. By appropriately modifying the heat treatment conditions as discussed below, it is possible to obtain a porous carbon material having the characteristics discussed above.

The porous carbon material of the present embodiment can be produced, for example, by the production method below.

(Production Method for Porous Carbon Material)

A method for producing the porous carbon material of the present embodiment includes a preparation step of preparing a resin-molded article containing a resin material serving as a carbon source, a first template, and a second template, and a heat treatment step of obtaining a porous carbon material by heat-treating the resin-molded article.

In the present embodiment, the first template includes amphiphilic molecules, and the second template includes latex particles. In addition, in the present embodiment, the heat treatment step includes heat treatment at 1100 °C or higher.

According to the production method of the present embodiment, a first pore group is formed by the first template, and a second pore group is formed by the second template. In addition, according to the production method of the present embodiment, by the heat treatment step including heat treatment at 1100 °C or higher, it becomes easier to obtain a porous carbon material that satisfies the requirements regarding the nitrogen adsorption amount discussed above. For this reason, the production method of the present embodiment enables the porous carbon material of the present embodiment to be easily produced.

Figure 1(a) is a section view schematically showing one example of the resin-molded article, and Figure 1(b) is a section view schematically showing one example of the porous carbon material.

A resin-molded article 10 shown in Figure 1(a) contains a resin material 11 and latex particles 12. In addition, the resin material 11 includes micelles (not shown) of the amphiphilic molecules. When such a resin-molded article 10 is heat-treated, the micelles in the resin material 11 are burned off, resulting in the formation of micropores corresponding to the first pore group, and the burning off of the latex particles 12 creates voids, thereby forming a branch-like higher-order structure.

A porous carbon material 20 shown in Figure 1(b) has a higher-order structure formed by the burning off of the latex particles 12, and micropores are formed in the porous carbon material 20 by the burning off of the micelles. Such a porous carbon material 20 has a first peak attributable to micropores and a second peak attributable to the higher-order structure in the pore size distribution.

The steps of the production method of the present embodiment will be discussed in detail below.

In the preparation step, a resin-molded article containing a resin material serving as a carbon source, a first template, and a second template is prepared.

Examples of the resin material, the first template, and the second template include the same resin materials, first template, and second template as those in the descriptions regarding the porous carbon material satisfying (A) discussed above.

The amounts of the first template and the second template to be blended in the preparation step may be the same amounts as those in the descriptions regarding the porous carbon material satisfying (A) discussed above.

In one preferred aspect (hereinafter the first aspect), the preparation step may include: a resin material formation step of forming a resin material in a dispersion containing micelles formed by amphiphilic molecules, latex particles, and an aqueous solvent to obtain a precipitate containing the micelles, the latex particles, and the resin material; and a drying step of drying the precipitate to obtain a resin-molded article containing the resin material, the amphiphilic molecules, and the latex particles.

The resin material formation step and the drying step of the first aspect may be the same steps as the resin material formation step and the drying step of the first aspect in the descriptions regarding the porous carbon material satisfying (A) discussed above.

In another preferred aspect (second aspect), the preparation step may include: an impregnation step of impregnating a mass of latex particles with a dispersion containing micelles formed by amphiphilic molecules, a resin material (or precursor thereof), and an aqueous solvent; and a drying step of removing the aqueous solvent.

The impregnation step and the drying step of the second aspect may be the same steps as the impregnation step and the drying step of the second aspect in the descriptions regarding the porous carbon material satisfying (A) discussed above.

The heat treatment step is a step of obtaining a porous carbon material by heat-treating the resin-molded article.

The heat treatment step includes heat treatment at 1100 °C or higher. The heat treatment temperature of the heat treatment may be 1300 °C or higher, 1500 °C or higher, 1700 °C or higher, 1900 °C or higher, or 2000 °C or higher. In addition, the heat treatment temperature of the heat treatment may be, for example, 3000 °C or lower, and may be 2700 °C or lower. In addition, the heat treatment may be heat treatment in an inert gas atmosphere (such as a nitrogen atmosphere or an argon atmosphere).

The heat treatment step may include, for example, a first heat treatment step in which heat treatment is performed at a heat treatment temperature of less than 1100 °C, and a second heat treatment step in which heat treatment is performed at a heat treatment temperature of 1100 °C or higher.

The first heat treatment step may be a step of obtaining a first heat-treated body by heat-treating the resin-molded article. The heat treatment in the first heat treatment step (hereinafter heat treatment (i)) may be heat treatment performed under conditions that enable the resin material in the resin-molded article to form amorphous carbon and in which the heat treatment temperature is less than 1100 °C.

The heat treatment temperature in the heat treatment (i) may be any temperature that enables the resin material in the resin-molded article to form amorphous carbon. For example, the heat treatment temperature may be 400 °C or higher, and may be 600 °C or higher or 800 °C or higher. In addition, the heat treatment temperature in the heat treatment (i) is less than 1100 °C, and may be 1000 °C or lower.

The heat treatment time (the time during which the object is maintained at the heat treatment temperature) in the heat treatment (i) is not particularly limited and may be, for example, 30 minutes or more, and may be one hour or more, two hours or more, or 2.5 hours or more. In addition, the heat treatment time in the heat treatment (i) may be, for example, seven hours or less, and may be six hours or less, five hours or less, or four hours or less.

The heat treatment (i) may be heat treatment in an inert gas atmosphere (such as a nitrogen atmosphere or an argon atmosphere).

The first heat-treated body obtained in the first heat treatment step may be a block-like porous carbon material. That is, in the first heat-treated body, amorphous carbon may be formed from the resin material, and the first template and the second template may be burned off.

The second heat treatment step may be a step of obtaining the porous carbon material of the present embodiment by heat-treating the first heat-treated body. The heat treatment in the second heat treatment step (hereinafter heat treatment (ii)) may be performed at a heat treatment temperature of 1100 °C or higher.

In addition, the heat treatment step may further include a pulverization step of pulverizing the first heat-treated body, and in this case, the second heat treatment step may be a step of obtaining the porous carbon material of the present embodiment by heat-treating a pulverized product of the first heat-treated body. The pulverization method is not particularly limited and may be, for example, pulverization using a mortar. The degree of pulverization may be appropriately modified in accordance with the application of the porous carbon material and the like.

The heat treatment temperature in the heat treatment (ii) is 1100 °C or higher, and from the viewpoint of more easily obtaining a porous carbon material that satisfies the characteristics discussed above, the heat treatment temperature may be 1300 °C or higher, 1500 °C or higher, 1700 °C or higher, 1900 °C or higher, or 2000 °C or higher. The heat treatment temperature in the heat treatment (ii) may be, for example, 3000 °C or lower, and may be 2900 °C or lower, 2800 °C or lower, or 2700 °C or lower.

The heat treatment time (the time during which the object is maintained at the heat treatment temperature) in the heat treatment (ii) is not particularly limited and may be, for example, 0.5 hours or more, and may be one hour or more, two hours or more, or three hours or more. In addition, the heat treatment time in the heat treatment (ii) may be, for example, seven hours or less, and may be six hours or less, five hours or less, or four hours or less.

The heat treatment (ii) may be heat treatment in an inert gas atmosphere (such as a nitrogen atmosphere or an argon atmosphere) and, particularly when the heat treatment temperature is 2000 °C or higher, may be heat treatment in an argon atmosphere from the viewpoint of suppressing gas reactions.

The applications of the porous carbon material of the present embodiment are not particularly limited. The porous carbon material of the present embodiment may be used for known applications of carbon materials without particular limitations.

The porous carbon material of the present embodiment enables the reaction sites to effectively function even when coated with a coating material, and thus can be particularly suitably used for applications in which the porous carbon material is coated with a coating material.

For example, the porous carbon material of the present embodiment can be suitably used as a cathode catalyst support for polymer electrolyte fuel cells. A cathode catalyst is used by supporting an active metal (such as platinum) on a porous carbon material and coating the material with an ionomer. According to the porous carbon material of the present embodiment, the active metal supported inside the first pore group can sufficiently exhibit catalytic ability without being poisoned by the ionomer.

In addition, the porous carbon material of the present embodiment can also suitably be used in applications such as electrode materials for capacitors, electrode materials for secondary batteries, and gas adsorption materials.

The porous carbon material of the present embodiment has excellent oxidation resistance. Oxidation resistance can be evaluated by, for example, the 5% weight loss temperature. The 5% weight loss temperature of the porous carbon material of the present embodiment may be, for example, 500 °C or higher, and may be 520 °C or higher, 540 °C or higher, 560 °C or higher, 580 °C or higher, or 600 °C or higher.

Note that herein, the 5% weight loss temperature of the porous carbon material is measured by the method below.

<Measurement of 5% Weight Loss Temperature>

After weighing about 5 mg of the porous carbon material, the sample is set in a thermogravimetric and differential thermal measurement device (STA 2500 manufactured by NETZSCH Japan K.K.), and the weight loss from 25 to 1000 °C is measured under a stream of air at 20 mL/min at a temperature-increasing rate of 10 °C/min. The weight at 25 °C in the obtained weight curve is defined as 100%, and the temperature at the point when the weight has decreased by 5% is defined as the 5% weight loss temperature.

[Porous Carbon Material Satisfying (C)]

The porous carbon material of the present embodiment has a first peak positioned in a pore size range of 3 nm or more and less than 10 nm and a second peak positioned in a pore size range of 10 nm or more and 1 $\mu$m or less in a pore size distribution measured by mercury intrusion porosimetry. Note that "having a peak in a pore size range of $A_1$ to $A_2$ in a pore size distribution" means that a peak having a peak top in a pore size range of $A_1$ to $A_2$ is present in the pore size distribution curve.

The porous carbon material of the present embodiment can be regarded as having a first pore group forming the first peak and a second pore group forming the second peak. In addition, the porous carbon material of the present embodiment can also be regarded as having a microstructure formed by the first pore group and a higher-order structure formed by the second pore group.

In the porous carbon material of the present embodiment, because a reaction substrate can efficiently move through large voids in the higher-order structure, it is possible to efficiently transport the reaction substrate to a reaction site and efficiently discharge a reaction product. In addition, the porous carbon material of the present embodiment has the first pore group, which makes it possible to achieve a high specific surface area and efficiently support an active metal. Furthermore, in the present embodiment, by coating with a coating material along the higher-order structure, it is possible to provide the coating material on the porous carbon material without poisoning or burying the active metal supported in the microstructure. Thus, according to the porous carbon material of the present embodiment, the reaction substrate can easily reach the reaction site and, even when coated with the coating material, the reaction site can effectively function. For this reason, the porous carbon material of the present embodiment is suitable as a catalyst support.

The first peak is positioned in a pore size range of 3 nm or more and less than 10 nm, and is preferably positioned in a pore size range of 4 nm or more and 7 nm or less. The second peak is positioned in a pore size range of 10 nm or more and 1 $\mu$m or less, and is preferably positioned in a pore size range of 20 nm or more and 200 nm or less. As a result, the effects discussed above are more significantly exhibited.

The first peak and the second peak may each be a peak having a peak value of 0.1 mL/g or more, and are preferably peaks having a peak value of 0.5 mL/g or more. In addition, the first peak and the second peak may each have a peak value of 4 mL/g or less, and may have a peak value of 2 mL/g or less.

The first peak and the second peak are preferably the peak having the highest peak value (peak A) or the peak having the second highest peak value (peak B) among the peaks positioned in a pore size range of 3 nm or more and 1 $\mu$m or less. That is, when the first peak is peak A, the second peak is preferably peak B, and when the first peak is peak B, the second peak is preferably peak A.

Note that herein, the pore size distribution of the porous carbon material is measured by mercury intrusion porosimetry. More specifically, the pore size distribution is measured with the method below. In addition, the pore size distribution is represented by a pore size distribution curve with the horizontal axis indicating the pore size (pore diameter) (logarithmic scale) and the vertical axis indicating the log differential pore volume (linear scale).

<Measurement of Pore Size Distribution>

First, 40 to 80 mg of the porous carbon material is collected in a 5 cc measurement cell. Next, using an automatic mercury porosimeter (AutoPore V 9620 manufactured by Micromeritics Instrument Corporation-Shimadzu Corporation), the mercury pressure is raised from 1 psia to 60,000 psia, and the amount of mercury intrusion is measured. Then, the pore size distribution is determined from the curve that is obtained from the pressure and amount of intrusion. The mercury contact angle is set to 130 degrees, and the mercury surface tension is set to 485 dynes/cm.

The porous carbon material of the present embodiment may have a surface oxygen concentration measured by XPS of 6 at% or less.

A porous carbon material with a low surface oxygen concentration can be regarded as a porous carbon material having a small amount of surface functional groups. When the surface oxygen concentration is low, the amount of surface functional groups of the porous carbon material is small, and the surface of the porous carbon material becomes more hydrophobic. This makes it easier for reaction products to be discharged from the interior of the porous carbon material when the porous carbon material is used as a catalyst support. Such a porous carbon material can be formed by, for example, the production method discussed below. In addition, because oxidation of carbon materials tends to occur from the surface, a porous carbon material having a low surface oxygen concentration measured by XPS can be regarded as having superior oxidation resistance due to the low surface oxygen.

The surface oxygen concentration of the porous carbon material of the present embodiment may be, for example, 6 at% or less, and from the viewpoint of the effects above being exhibited more significantly, may be 4.5 at% or less, 3 at% or less, 2 at% or less, 1 at% or less, or 0.5 at% or less. The lower limit of the surface oxygen concentration of the porous carbon material of the present embodiment is not particularly limited, and may be 0 at%.

The porous carbon material of the present embodiment may have a surface carbon concentration measured by XPS of 94 at% or more.

A porous carbon material with a high surface carbon concentration can be regarded as a porous carbon material having a small amount of surface functional groups. When the surface carbon concentration is high, the amount of surface functional groups in the porous carbon material is small, and the surface of the porous carbon material becomes more hydrophobic. This makes it easier for reaction products to be discharged from the interior of the porous carbon material when the porous carbon material is used as a catalyst support. Such a porous carbon material can be formed by a heat treatment step that includes heat treatment at 1100 °C or higher, as indicated for example in the production method discussed below.

The surface carbon concentration of the porous carbon material of the present embodiment may be, for example, 94 at% or more, and from the viewpoint of the effects above being exhibited more significantly, may be 95.5 at% or more, 97 at% or more, 98 at% or more, 99 at% or more, or 99.5 at% or more. The upper limit of the surface carbon concentration of the porous carbon material of the present embodiment is not particularly limited, and may be 100 at%.

In the porous carbon material of the present embodiment, the sum of the surface oxygen concentration and the surface carbon concentration is 100 at%. For example, when the surface oxygen concentration is 2 at%, the surface carbon concentration is 98 at%.

Note that herein, the surface oxygen concentration and the surface carbon concentration of the porous carbon material are measured by the method below.

<Measurement of Surface Oxygen Concentration and Surface Carbon Concentration>

The surface oxygen concentration and the surface carbon concentration are determined through XPS measurement using an X-ray photoelectron spectrometer (K-Alpha X-ray photoelectron spectrometer manufactured by Thermo Fisher Scientific K.K.).

Specifically, the porous carbon material is packed in the recessed portion ($\varphi$3 mm $\times$ 1 mm thickness) of a powder sample holder, the sample surface is compressed flat, and then the sample is subjected to measurement. The excitation source used for measurement is Al-K$\alpha$ with a monochromator, the X-ray irradiation area is set to 400 $\times$ 200 $\mu$m (elliptical in shape), the detection angle is set to 90° (perpendicular to the sample surface), the pass energy is set to 50 eV, and the number of scans is set to five. The elements to be detected are oxygen (O) and carbon (C), and narrow spectra of these elements are measured. Integration is performed in the O1s range (about 540 to 527 eV) for O and in the C1s range (about 293 to 280 eV) for C to calculate the surface oxygen concentration and the surface carbon concentration. At this time, charge correction is performed using the C1s peak (284.8 eV) as the reference peak, and the background is specified as the Shirley background. In addition, normalization is performed such that the sum of the surface oxygen concentration and the surface carbon concentration becomes 100 at%.

The porous carbon material of the present embodiment may have a peak (i) that has a full width at half maximum of 0.6° or less and a peak top within the range of 2θ = 25° to 27° in an X-ray diffraction pattern.

It can be concluded that regions with high crystallinity are formed in some portions of the porous carbon material having the peak (i) above. Better oxidation resistance is achieved as a result of the porous carbon material having regions with high crystallinity. Such a porous carbon material can be formed by a heat treatment step that includes heat treatment at 1100 °C or higher, as indicated for example in the production method discussed below.

The full width at half maximum of the peak (i) may be, for example, 0.6° or less, and may be 0.5° or less, 0.4° or less, or 0.3° or less. In addition, the full width at half maximum of the peak (i) may be, for example, 0.1° or more, 0.2° or more, or 0.3° or more.

The crystallite size of the peak (i) may be, for example, 60 nm or less, 55 nm or less, 50 nm or less, or 45 nm or less. In addition, the crystallite size of the peak (i) may be, for example, 20 nm or more.

The porous carbon material of the present embodiment may further have a peak (ii) that has a full width at half maximum of 9° or less and partially overlaps with the peak (i) in an X-ray diffraction pattern. That is, it can be concluded that the peak (i) is a peak present at a position coinciding with the peak (ii).

The full width at half maximum of the peak (ii) may be, for example, 8.5° or less. In addition, the full width at half maximum of the peak (i) may be, for example, 1.0° or more, 4.0° or more, or 7.0° or more. The peak height ratio of the peak (i) to the peak (ii) may be, for example, 0.1 or more, 0.2 or more, or 0.3 or more. In addition, the peak height ratio of the peak (i) to the peak (ii) may be, for example, 5.0 or less, 3.0 or less, or 1.5 or less.

Note that herein, the X-ray diffraction pattern of the porous carbon material is measured by the method below.

<Measurement of X-Ray Diffraction Pattern>

The porous carbon material is placed on an Si zero-background sample holder (filling section: 20 mm $\times$ 18 mm $\times$ 0.2 mm thickness) and spread out with a glass plate such that the sample surface (height of the portion filled with the sample) coincides with the reference surface of the sample holder, to obtain a measurement sample.

The obtained measurement sample is set in an X-ray diffractometer (X-ray diffractometer Ultima IV manufactured by Rigaku Corporation), and the X-ray diffraction pattern is measured at ambient temperature using Cu-K$\alpha$ as the X-ray source, a standard sample stage as the sample stage, the focusing method as the optical system, a semiconductor detector (D/teX Ultra) as the detector, and a scattering prevention tube (slit width: 4 mm, length: about 9 cm) with a measurement angle range of $2\theta = 10°$ to $70°$, a sampling width of $0.02°$, and a scanning speed of $5°/min$.

<Calculation of Full Width at Half Maximum, Crystallite Size, and Peak Height Ratio>

For the calculation of the full width at half maximum and the crystallite size, comprehensive powder X-ray diffraction pattern analysis software JADE 9 is used.

Assuming that the peak (i) and the peak (ii) are present in the range of $2\theta = 10°$ to $40°$ in the X-ray diffraction pattern, peak separation is performed to calculate the full width at half maximum (measured $\beta$) derived from the Cu-K$\alpha_1$ line as well as the peak position $2\theta$ (°) and the peak height of the peak (i) and the peak (ii). However, when a sharp peak (i) is not observed in the X-ray diffraction pattern, peak separation is performed assuming that only the peak (ii) is present. In this case, the peak shape is set to a pseudo-Voigt function and the background shape is set to a cubic spline (fixed). The background is subtracted by manually specifying six points as connection points (for example, in Figure 3, $2\theta = 10°$, $11°$, $12.3°$, $15°$, $35°$, and $40°$).

When calculating the full width at half maximum and the crystallite size, correction of the full width at half maximum derived from the instrument is performed with the method below. Specifically, the same measurement as that above under <Measurement of X-Ray Diffraction Pattern> is performed for Si powder (NIST SRM 640c), and whole powder pattern fitting (WPPF) is performed on the measurement results using JADE 9 to obtain the full-width-at-half-maximum curve for Si. Using the obtained full-width-at-half-maximum curve for Si, the full width at half maximum of Si at the peak position $2\theta$ of the peak (i) in the porous carbon material is determined, and this is used as the instrument-derived full width at half maximum ($\beta_{instrument}$) corresponding to the peak (i). This value is substituted into the equation below and correction is performed to calculate the sample-derived full width at half maximum ($\beta_{sample}$) of the peak (i). Similarly, in the case of the peak (ii), the full width at half maximum of Si at the peak position $2\theta$ of the peak (ii) is determined, and this is used as the instrument-derived full width at half maximum ($\beta_{instrument}$) corresponding to the peak (ii). This value is substituted into the equation below and correction is performed to calculate the sample-derived full width at half maximum ($\beta_{sample}$) of the peak (ii).

$$(\beta_{sample})^2 = [(\beta_{observed})^2 - (\beta_{instrument})^2]$$

Next, the full width at half maximum ($\beta_{sample}$) of the peak (i) is substituted into the Scherrer equation below to calculate the crystallite size. At this time, the Scherrer constant K is set to 1, the wavelength $\lambda$ of the X-rays used for measurement is set to 0.154 nm, and the peak position of the peak (i) determined through peak separation using JADE 9 is used as the value of the diffraction angle $2\theta$ (°).

$$\text{crystallite size} = (K \times \lambda) / (\beta \times \cos\theta)$$

The peak height ratio is calculated by substituting the peak height of the peak (i) and the peak height of the peak (ii) determined by the peak separation above into the equation below.

$$(\text{peak height ratio}) = (\text{peak height of peak (i)} / (\text{peak height of peak (ii)}))$$

In a nitrogen adsorption measurement, the porous carbon material of the present embodiment may have a nitrogen adsorption amount at a relative pressure ($P/P_0$) of 0.2 of, for example, 10 to 250 $cm^3/g$.

A porous carbon material with a low nitrogen adsorption amount at a relative pressure ($P/P_0$) of 0.2 can be regarded as a porous carbon material having few micropores. A porous carbon material that has the nitrogen adsorption amount above of 250 $cm^3/g$ or less has fewer fine pores that are likely to become a starting point for degradation, and therefore tends to have better oxidation resistance. In addition, a porous carbon material that has the nitrogen adsorption amount above of 10 $cm^3/g$ or more tends to be more suitable as a catalyst support because the presence of fine pores makes it easier for a catalyst to be supported. Such a porous carbon material can be formed by a heat treatment step that includes heat treatment at 1100 °C or higher, as indicated for example in the production method discussed below.

The nitrogen adsorption amount at a relative pressure ($P/P_0$) of 0.2 may be, for example, 250 $cm^3/g$ or less, and from the viewpoint of the effects above being exhibited more significantly, may be 200 $cm^3/g$ or less, 180 $cm^3/g$ or less, 170 $cm^3/g$ or less, 160 $cm^3/g$ or less, 150 $cm^3/g$ or less, 140 $cm^3/g$ or less, 130 $cm^3/g$ or less, or 120 $cm^3/g$ or less.

The nitrogen adsorption amount at a relative pressure ($P/P_0$) of 0.2 is 10 $cm^3/g$ or more, and from the viewpoint of the effects above being exhibited more significantly, may be 20 cm$^3$/g or more, 30 cm$^3$/g or more, 40 cm$^3$/g or more, or 50 cm$^3$/g or more.

In the porous carbon material of the present embodiment, the ratio ($N_1/N_0$) of the nitrogen adsorption amount ($N_1$) at a relative pressure (P/P$_0$) of 0.2 to the nitrogen adsorption amount ($N_0$) at a relative pressure (P/P$_0$) of 0.8 may be, for example, 0.6 or less, and from the viewpoint of the effects discussed above being exhibited more significantly, may be 0.5 or less or 0.4 or less.

Note that herein, the nitrogen adsorption amount of the porous carbon material is measured by the method below.

<Measurement of Nitrogen Adsorption Amount>

The porous carbon material is dried for three hours at 300 °C under vacuum using a pretreatment device (BELPREP VAC II manufactured by MicrotracBEL Corp.). Next, a nitrogen adsorption isotherm is measured using a high-precision gas/vapor adsorption amount measuring device (BELSORP MAX II manufactured by MicrotracBEL Corp.). Then, the nitrogen adsorption amount at a predetermined relative pressure is calculated from the obtained nitrogen adsorption isotherm.

The specific surface area of the porous carbon material of the present embodiment may be, for example, 200 m$^2$/g or more, and may be 250 m$^2$/g or more, 300 m$^2$/g or more, or 350 m$^2$/g or more. As a result, when an active metal is supported, the dispersibility of the active metal on the porous carbon material improves, and reaction sites tend to be formed more efficiently. In addition, the specific surface area of the porous carbon material of the present embodiment may be, for example, 1800 m$^2$/g or less, and may be 1500 m$^2$/g or less, 1000 m$^2$/g or less, 700 m$^2$/g or less, or 500 m$^2$/g or less. This further improves the strength of the porous structure of the porous carbon material, and the porous structure tends to become more stable.

Note that herein, the specific surface area of the porous carbon material refers to a value measured by the nitrogen adsorption method. More specifically, the specific surface area is measured by the method below in accordance with JIS Z 8830.

<Measurement of Specific Surface Area>

The porous carbon material is dried for three hours at 300 °C under vacuum using a pretreatment device (BELPREP VAC II manufactured by MicrotracBEL Corp.). Next, a nitrogen adsorption isotherm is measured using an automatic specific surface area measuring device (BELSORP MAX II manufactured by MicrotracBEL Corp.). Then, the specific surface area is calculated using the BET method from the obtained nitrogen adsorption isotherm.

The porous carbon material of the present embodiment may include, for example, a heat-treated product of a resin material. The porous carbon material of the present embodiment may be, for example, a heat-treated product of a resin-molded article containing a resin material.

The resin material may be any material that can form amorphous carbon through heat treatment. Examples of the resin material include the same resin materials as those in the descriptions regarding the porous carbon material satisfying (A) discussed above.

The heat-treated product of the resin material may be any product obtained by heat-treating the resin material under conditions in which amorphous carbon is formed. By appropriately modifying the heat treatment conditions as discussed below, it is possible to obtain a porous carbon material having the characteristics discussed above.

The porous carbon material of the present embodiment can be produced, for example, by the production method below.

(Production Method for Porous Carbon Material)

A method for producing the porous carbon material of the present embodiment includes a preparation step of preparing a resin-molded article containing a resin material serving as a carbon source, a first template, and a second template, and a heat treatment step of obtaining a porous carbon material by heat-treating the resin-molded article.

In the present embodiment, the first template includes amphiphilic molecules, and the second template includes latex particles. In addition, in the present embodiment, the heat treatment step includes heat treatment at 1100 °C or higher.

According to the production method of the present embodiment, a first pore group is formed by the first template, and a second pore group is formed by the second template. In addition, according to the production method of the present embodiment, by the heat treatment step including heat treatment at 1100 °C or higher, it becomes easier to obtain a porous carbon material that satisfies the requirements discussed above. For this reason, the production method of the present embodiment enables the porous carbon material of the present embodiment to be easily produced.

Figure 1(a) is a section view schematically showing one example of the resin-molded article, and Figure 1(b) is a section view schematically showing one example of the porous carbon material.

A resin-molded article 10 shown in Figure 1(a) contains a resin material 11 and latex particles 12. In addition, the resin material 11 includes micelles (not shown) of the amphiphilic molecules. When such a resin-molded article 10 is heat-treated, the micelles in the resin material 11 are burned off, resulting in the formation of micropores corresponding to the first pore group, and the burning off of the latex particles 12 creates voids, thereby forming a branch-like higher-order structure.

A porous carbon material 20 shown in Figure 1(b) has a higher-order structure formed by the burning off of the latex particles 12, and micropores are formed in the porous carbon material 20 by the burning off of the micelles. Such a porous carbon material 20 has a first peak attributable to micropores and a second peak attributable to the higher-order structure in the pore size distribution.

The steps of the production method of the present embodiment will be discussed in detail below.

In the preparation step, a resin-molded article containing a resin material serving as a carbon source, a first template, and a second template is prepared.

Examples of the resin material, the first template, and the second template include the same resin materials, first template, and second template as those in the descriptions regarding the porous carbon material satisfying (A) discussed above.

The amounts of the first template and the second template to be blended in the preparation step may be the same amounts as those in the descriptions regarding the porous carbon material satisfying (A) discussed above.

In one preferred aspect (hereinafter the first aspect), the preparation step may include: a resin material formation step of forming a resin material in a dispersion containing micelles formed by amphiphilic molecules, latex particles, and an aqueous solvent to obtain a precipitate containing the micelles, the latex particles, and the resin material; and a drying step of drying the precipitate to obtain a resin-molded article containing the resin material, the amphiphilic molecules, and the latex particles.

The resin material formation step and the drying step of the first aspect may be the same steps as the resin material formation step and the drying step of the first aspect in the descriptions regarding the porous carbon material satisfying (A) discussed above.

In another preferred aspect (second aspect), the preparation step may include: an impregnation step of impregnating a mass of latex particles with a dispersion containing micelles formed by amphiphilic molecules, a resin material (or precursor thereof), and an aqueous solvent; and a drying step of removing the aqueous solvent.

The impregnation step and the drying step of the second aspect may be the same steps as the impregnation step and the drying step of the second aspect in the descriptions regarding the porous carbon material satisfying (A) discussed above.

The heat treatment step is a step of obtaining a porous carbon material by heat-treating the resin-molded article.

The heat treatment step may be the same step as the heat treatment step in the descriptions regarding the porous carbon material satisfying (B) discussed above.

The applications of the porous carbon material of the present embodiment are not particularly limited. The porous carbon material of the present embodiment may be used for known applications of carbon materials without particular limitations.

The porous carbon material of the present embodiment enables the reaction sites to effectively function even when coated with a coating material, and thus can be particularly suitably used for applications in which the porous carbon material is coated with a coating material.

For example, the porous carbon material of the present embodiment can be suitably used as a cathode catalyst support for polymer electrolyte fuel cells. A cathode catalyst is used by supporting an active metal (such as platinum) on a porous carbon material and coating the material with an ionomer. According to the porous carbon material of the present embodiment, the active metal supported inside the first pore group can sufficiently exhibit catalytic ability without being poisoned by the ionomer.

In addition, the porous carbon material of the present embodiment can also suitably be used in applications such as electrode materials for capacitors, electrode materials for secondary batteries, and gas adsorption materials.

The porous carbon material of the present embodiment has excellent oxidation resistance. Oxidation resistance can be evaluated by, for example, the 5% weight loss temperature. The 5% weight loss temperature of the porous carbon material of the present embodiment may be, for example, 500 °C or higher, and may be 520 °C or higher, 540 °C or higher, 560 °C or higher, 580 °C or higher, 600 °C or higher, or 620 °C or higher.

Note that herein, the 5% weight loss temperature of the porous carbon material is measured by the method below.

<Measurement of 5% Weight Loss Temperature>

After weighing about 5 mg of the porous carbon material, the sample is set in a thermogravimetric and differential thermal measurement device (STA 2500 manufactured by NETZSCH Japan K.K.), and the weight loss from 25 to 1000 °C is measured under a stream of air at 20 mL/min at a temperature-increasing rate of 10 °C/min. The weight at 25 °C in the obtained weight curve is defined as 100%, and the temperature at the point when the weight has decreased by 5% is defined as the 5% weight loss temperature.

Although preferred embodiments of the present disclosure have been described above, the present disclosure is not limited thereto.

**EXAMPLES**

The present disclosure will be described in more detail below by way of the examples, but the present disclosure is not limited thereto.

(Example A-1)

A dispersion was prepared by mixing 5.9 parts by mass of resorcinol, 0.8 parts by mass of 5 mol/L hydrochloric acid, 9.3 parts by mass of a polyethylene oxide-polypropylene oxide-polyethylene oxide triblock copolymer (Pluronic F-127 manufactured by Sigma-Aldrich, Inc.), 44.1 parts by mass of polystyrene latex particles, and 29.7 parts by mass of ethanol, and then adding 10.1 parts by mass of a formaldehyde solution (formaldehyde content: 37 mass%).

The dispersion was stirred at 25 °C for 72 hours to obtain a precipitate. The precipitate was dried at 70 °C for 48 hours to obtain a resin-molded article. The resin-molded article was heated to 900 °C at 1.5 °C/min in a nitrogen atmosphere and then held at 900 °C for three hours. Subsequently, the resin-molded article was heated to 2100 °C at 10 °C/min in an argon atmosphere, and then held at 2100 °C for one hour to obtain a block-like porous carbon material. The obtained porous carbon material was pulverized with a mortar to produce a powder-like porous carbon material.

(Example A-2)

A resin-molded article was obtained in the same manner as in Example A-1. The obtained resin-molded article was heated to 900 °C at 1.5 °C/min in a nitrogen atmosphere and then held at 900 °C for three hours. Subsequently, the resin-molded article was heated to 2000 °C at 10 °C/min in an argon atmosphere, and then held at 2000 °C for one hour to obtain a block-like porous carbon material. The obtained porous carbon material was pulverized with a mortar to produce a powder-like porous carbon material.

(Example A-3)

A resin-molded article was obtained in the same manner as in Example A-1. The obtained resin-molded article was heated to 900 °C at 1.5 °C/min in a nitrogen atmosphere and then held at 900 °C for three hours. Subsequently, the resin-molded article was heated to 1800 °C at 10 °C/min in a nitrogen atmosphere, and then held at 1800 °C for one hour to obtain a block-like porous carbon material. The obtained porous carbon material was pulverized with a mortar to produce a powder-like porous carbon material.

(Reference Example A-1)

A resin-molded article was obtained in the same manner as in Example A-1. The obtained resin-molded article was heated to 900 °C at 1.5 °C/min in a nitrogen atmosphere and then held at 900 °C for three hours. Subsequently, the resin-molded article was heated to 1400 °C at 10 °C/min in a nitrogen atmosphere, and then held at 1400 °C for one hour to obtain a porous carbon material. The obtained porous carbon material was pulverized with a mortar to produce a powder-like porous carbon material.

(Reference Example A-2)

A resin-molded article was obtained in the same manner as in Example A-1. The obtained resin-molded article was heated to 1200 °C at 1.5 °C/min in a nitrogen atmosphere and then held at 1200 °C for three hours to obtain a porous carbon material. The obtained porous carbon material was pulverized with a mortar to produce a powder-like porous carbon material.

(Reference Example A-3)

A resin-molded article was obtained in the same manner as in Example A-1. The obtained resin-molded article was heated to 900 °C at 1.5 °C/min in a nitrogen atmosphere and then held at 900 °C for three hours to obtain a porous carbon material. The obtained porous carbon material was pulverized with a mortar to produce a powder-like porous carbon material.

(Comparative Example A-1)

A resin-molded article was obtained in the same manner as in Example A-1. The obtained resin-molded article was heated to 900 °C at 1.5 °C/min in a nitrogen atmosphere and then held at 900 °C for three hours. Next, the resin-molded article was pulverized with a mortar into a powder, heated to 460 °C at 1.5 °C/min in an air atmosphere, and then held at 460 °C for one hour to obtain a powder-like porous carbon material.

The following measurements were performed on the porous carbon materials obtained in Examples A-1 to A-3, Reference Examples A-1 to A-3, and Comparative Example A-1.

<Measurement of Pore Size Distribution by Mercury Intrusion Porosimetry>

In a 5 cc measurement cell, 40 to 80 mg of the porous carbon material was collected. Next, using an automatic mercury porosimeter (AutoPore V 9620 manufactured by Micromeritics Instrument Corporation-Shimadzu Corporation), the mercury pressure was raised from 1 psia to 60,000 psia, and the amount of mercury intrusion was measured. Then, the pore size distribution was determined from the curve that was obtained from the pressure and amount of intrusion. The mercury contact angle was set to 130 degrees, and the mercury surface tension was set to 485 dynes/cm. The positions of the first peak and the second peak in the obtained pore size distribution were determined and are shown in Table 1 and Table 2.

Figure 2 shows a pore size distribution curve of the porous carbon material obtained in Example A-1.

<Measurement of X-Ray Diffraction Pattern>

The porous carbon material was placed on an Si zero-background sample holder (filling section: 20 mm × 18 mm × 0.2 mm thickness) and spread out with a glass plate such that the sample surface (height of the portion filled with the sample) coincided with the reference surface of the sample holder, to obtain a measurement sample.

The obtained measurement sample was set in an X-ray diffractometer (X-ray diffractometer Ultima IV manufactured by Rigaku Corporation), and the X-ray diffraction pattern was measured at ambient temperature using Cu-K$\alpha$ as the X-ray source, a standard sample stage as the sample stage, the focusing method as the optical system, a semiconductor detector (D/teX Ultra) as the detector, and a scattering prevention tube (slit width: 4 mm, length: about 9 cm) with a measurement angle range of $2\theta = 10°$ to $70°$, a sampling width of $0.02°$, and a scanning speed of $5°/min$.

<Calculation of Full Width at Half Maximum, Crystallite Size, and Peak Height Ratio>

For the calculation of the full width at half maximum and the crystallite size, comprehensive powder X-ray diffraction pattern analysis software JADE 9 was used. Assuming that the peak (i) and the peak (ii) are present in the range of $2\theta = 10°$ to $40°$ in the X-ray diffraction pattern, peak separation was performed to calculate the full width at half maximum (hereinafter measured $\beta$) derived from the Cu-K$\alpha_1$ line as well as the peak position $2\theta$ (°) and the peak height of the peak (i) and the peak (ii). However, when a sharp peak (i) was not observed in the X-ray diffraction pattern, peak separation was performed assuming that only the peak (ii) was present. In this case, the peak shape was set to a pseudo-Voigt function and the background shape was set to a cubic spline (fixed). The background was subtracted by manually specifying six points as connection points (for example, in Figure 3, $2\theta = 10°$, $11°$, $12.3°$, $15°$, $35°$, and $40°$).

When calculating the full width at half maximum and the crystallite size, correction of the full width at half maximum derived from the instrument was performed with the method below. Specifically, the same measurement as that above under <Measurement of X-Ray Diffraction Pattern> was performed for Si powder (NIST SRM 640c), and whole powder pattern fitting (WPPF) was performed on the measurement results using JADE 9 to obtain the full-width-at-half-maximum curve for Si. Using the obtained full-width-at-half-maximum curve for Si, the full width at half maximum of Si at the peak position $2\theta$ of the peak (i) in the porous carbon material was determined, and this was used as the instrument-derived full width at half maximum ($\beta_{instrument}$) corresponding to the peak (i). This value was substituted into the equation below and correction was performed to calculate the sample-derived full width at half maximum ($\beta_{sample}$) of the peak (i). Similarly, in the case of the peak (ii), the full width at half maximum of Si at the peak position $2\theta$ of the peak (ii) was determined, and this was used as the instrument-derived full width at half maximum ($\beta_{instrument}$) corresponding to the peak (ii). This value was substituted into the equation below and correction was performed to calculate the sample-derived full width at half maximum ($\beta_{sample}$) of the peak (ii).

$$(\beta_{sample})^2 = [(\beta_{observed})^2 - (\beta_{instrument})^2]$$

Next, the full width at half maximum ($\beta_{sample}$) of the peak (i) was substituted into the Scherrer equation below to calculate the crystallite size. At this time, the Scherrer constant K was set to 1, the wavelength λ of the X-rays used for measurement was set to 0.154 nm, and the peak position of the peak (i) determined through peak separation using JADE 9 was used as the value of the diffraction angle 2θ (°).

$$\text{crystallite size} = (K \times \lambda) / (\beta \times \cos\theta)$$

The peak height ratio was calculated by substituting the peak height of the peak (i) and the peak height of the peak (ii) determined by the peak separation above into the equation below.

$$(\text{peak height ratio}) = (\text{peak height of peak (i)} / (\text{peak height of peak (ii)})$$

The presence or absence of the peak (i), the full width at half maximum of the peak (i) and the peak (ii), and the peak height ratios are shown in Table 1 and Table 2.
Figure 3 shows the X-ray diffraction pattern of the porous carbon material obtained in Example A-1.

<Measurement of Nitrogen Adsorption Amount>

The porous carbon material was dried for three hours at 300 °C under vacuum using a pretreatment device (BELPREP VAC II manufactured by MicrotracBEL Corp.). Next, a nitrogen adsorption isotherm was measured using a high-precision gas/vapor adsorption amount measuring device (BELSORP MAX II manufactured by MicrotracBEL Corp.).
Based on the measurement results, the nitrogen adsorption amount at a relative pressure ($P/P_0$) of 0.2, and the ratio ($N_1/N_0$) of the nitrogen adsorption amount ($N_1$) at a relative pressure ($P/P_0$) of 0.2 to the nitrogen adsorption amount ($N_0$) at a relative pressure ($P/P_0$) of 0.8, were determined and are shown in Table 1 and Table 2.
<Measurement of Surface Oxygen Concentration and Surface Carbon Concentration by XPS>
The surface oxygen concentration and the surface carbon concentration were determined through XPS measurement using an X-ray photoelectron spectrometer (K-Alpha X-ray photoelectron spectrometer manufactured by Thermo Fisher Scientific K.K.).
Specifically, the porous carbon material was packed in the recessed portion (φ3 mm × 1 mm thickness) of a powder sample holder, the sample surface was compressed flat, and then the sample was subjected to measurement. The excitation source used for measurement was Al-Kα with a monochromator, the X-ray irradiation area was set to 400 × 200 μm (elliptical in shape), the detection angle was set to 90° (perpendicular to the sample surface), the pass energy was set to 50 eV, and the number of scans was set to five. The elements to be detected were oxygen (O) and carbon (C), and narrow spectra of these elements were measured. Integration was performed in the O1s range (about 540 to 527 eV) for O and in the C1s range (about 293 to 280 eV) for C to calculate the surface oxygen concentration and the surface carbon concentration. At this time, charge correction was performed using the C1s peak (284.8 eV) as the reference peak, and the background was specified as the Shirley background. In addition, normalization was performed such that the sum of the surface oxygen concentration and the surface carbon concentration became 100 at%.
The measured surface oxygen concentration and surface carbon concentration are shown in Table 1 and Table 2.

<Measurement of Specific Surface Area>

The porous carbon material was dried for three hours at 300 °C under vacuum using a pretreatment device (BELPREP VAC II manufactured by MicrotracBEL Corp.). Next, a nitrogen adsorption isotherm was measured using a high-precision gas/vapor adsorption amount measuring device (BELSORP MAX II manufactured by MicrotracBEL Corp.). Then, the specific surface area was calculated using the BET method from the obtained nitrogen adsorption isotherm.
The calculated specific surface area is shown in Table 1 and Table 2.

<Evaluation of Oxidation Resistance>

The oxidation resistance of the porous carbon material was evaluated by measuring the 5% weight loss temperature. It can be concluded that the higher the 5% weight loss temperature, the better the oxidation resistance. The 5% weight loss temperature was measured by the method below. The results are shown in Table 1 and Table 2.

<Measurement of 5% Weight Loss Temperature>

After weighing about 5 mg of the porous carbon material, the sample was set in a thermogravimetric and differential thermal measurement device (STA 2500 manufactured by NETZSCH Japan K.K.), and the weight loss from 25 to 1000 °C was measured under a stream of air at 20 mL/min at a temperature-increasing rate of 10 °C/min. The weight at 25 °C in the obtained weight curve was defined as 100%, and the temperature at the point when the weight decreased by 5% was defined as the 5% weight loss temperature.

[Table 1]

| | EXAMPLE A-1 | EXAMPLE A-2 | EXAMPLE A-3 |
|---|---|---|---|
| HEAT TREATMENT TEMPERATURE (°C) | 2100 | 2000 | 1800 |
| FIRST PEAK (nm) | 6 | 5 | 6 |
| SECOND PEAK (nm) | 160 | 130 | 140 |
| PRESENCE/ABSENCE OF PEAK (i) | PRESENT | PRESENT | PRESENT |
| FULL WIDTH AT HALF MAXIMUM OF PEAK (i) (°) | 0.3 | 0.4 | 0.5 |
| FULL WIDTH AT HALF MAXIMUM OF PEAK (ii) (°) | 7.2 | 7.8 | 8.2 |
| PEAK HEIGHT RATIO | 1.3 | 0.9 | 0.3 |
| NITROGEN ADSORPTION AMOUNT AT RELATIVE PRESSURE OF 0.2 ($cm^3/g$) ($N_1$) | 107 | 116 | 120 |
| NITROGEN ADSORPTION AMOUNT AT RELATIVE PRESSURE OF 0.8 ($cm^3/g$) ($N_0$) | 288 | 290 | 292 |
| RATIO ($N_1/N_0$) | 0.37 | 0.40 | 0.41 |
| SURFACE OXYGEN CONCENTRATION (at%) | 0.3 | 0.4 | 0.5 |
| SURFACE CARBON CONCENTRATION (at%) | 99.7 | 99.6 | 99.5 |
| SPECIFIC SURFACE AREA ($m^2/g$) | 370 | 382 | 435 |
| 5% WEIGHT LOSS TEMPERATURE (°C) | 695 | 680 | 640 |

[Table 2]

| | REF. EX. A-1 | REF. EX. A-2 | REF. EX. A-3 | COMP. EX. A-1 |
|---|---|---|---|---|
| HEAT TREATMENT TEMPERATURE (°C) | 1400 | 1200 | 900 | 900 |
| FIRST PEAK (nm) | 5 | 6 | 5 | 7 |
| SECOND PEAK (nm) | 110 | 130 | 105 | 75 |
| PRESENCE/ABSENCE OF PEAK (i) | ABSENT | ABSENT | ABSENT | ABSENT |
| FULL WIDTH AT HALF MAXIMUM OF PEAK (ii) (°) | 8.9 | 9.0 | 9.4 | 10.1 |
| NITROGEN ADSORPTION AMOUNT AT RELATIVE PRESSURE OF 0.2 ($cm^3/g$) ($N_1$) | 145 | 160 | 181 | 287 |
| NITROGEN ADSORPTION AMOUNT AT RELATIVE PRESSURE OF 0.8 ($cm^3/g$) ($N_0$) | 310 | 350 | 355 | 451 |
| RATIO ($N_1/N_0$) | 0.47 | 0.46 | 0.51 | 0.64 |
| SURFACE OXYGEN CONCENTRATION (at%) | 0.9 | 2 | 4 | 15 |
| SURFACE CARBON CONCENTRATION (at%) | 99.1 | 98 | 96 | 85 |
| SPECIFIC SURFACE AREA ($m^2/g$) | 561 | 600 | 650 | 1020 |
| 5% WEIGHT LOSS TEMPERATURE (°C) | 589 | 524 | 514 | 425 |

(Example B-1)

A resin-molded article was obtained in the same manner as in Example A-1. In addition, a block-like porous carbon material was obtained in the same manner as in Example A-1. The obtained porous carbon material was pulverized with a mortar to produce a powder-like porous carbon material.

(Example B-2)

A resin-molded article was obtained in the same manner as in Example B-1. The obtained resin-molded article was heated to 900 °C at 1.5 °C/min in a nitrogen atmosphere and then held at 900 °C for three hours. Subsequently, the resin-molded article was heated to 1400 °C at 10 °C/min, and then held at 1400 °C for one hour to obtain a block-like porous carbon material. The obtained porous carbon material was pulverized with a mortar to produce a powder-like porous carbon material.

(Example B-3)

A resin-molded article was obtained in the same manner as in Example B-1. The obtained resin-molded article was heated to 1200 °C at 1.5 °C/min in a nitrogen atmosphere and then held at 1200 °C for three hours to obtain a block-like porous carbon material. The obtained porous carbon material was pulverized with a mortar to produce a powder-like porous carbon material.

(Example B-4)

A resin-molded article was obtained in the same manner as in Example B-1. The obtained resin-molded article was heated to 900 °C at 1.5 °C/min in a nitrogen atmosphere and then held at 900 °C for three hours to obtain a block-like porous carbon material. The obtained porous carbon material was pulverized with a mortar to produce a powder-like porous carbon material.

(Comparative Example B-1)

A resin-molded article was obtained in the same manner as in Example B-1. The obtained resin-molded article was heated to 900 °C at 1.5 °C/min in a nitrogen atmosphere and then held at 900 °C for three hours to obtain a block-like material. Next, the obtained block-like material was pulverized with a mortar into a powder-like form, heated to 460 °C at 1.5 °C/min in an air atmosphere, and then held at 460 °C for one hour to obtain a powder-like porous carbon material.

(Comparative Example B-2)

A resin-molded article was obtained in the same manner as in Example B-1. The obtained resin-molded article was heated to 900 °C at 1.5 °C/min in a nitrogen atmosphere and then held at 900 °C for three hours to obtain a block-like material. Next, the obtained block-like material was pulverized with a mortar into a powder-like form, heated to 520 °C at 1.5 °C/min in an air atmosphere, and then held at 520 °C for one hour to obtain a powder-like porous carbon material.
The same measurements as those above were performed on the porous carbon materials obtained in Examples B-1 to B-4 and Comparative Examples B-1 and B-2. The results are shown in Table 3 and Table 4.

[Table 3]

|  | EX. B-1 | EX. B-2 | EX. B-3 | EX. B-4 |
|---|---|---|---|---|
| HEAT TREATMENT TEMPERATURE (°C) | 2100 | 1400 | 1200 | 900 |
| FIRST PEAK (nm) | 6 | 5 | 6 | 5 |
| SECOND PEAK (nm) | 160 | 110 | 130 | 105 |
| NITROGEN ADSORPTION AMOUNT AT RELATIVE PRESSURE OF 0.2 ($cm^3$/g) ($N_1$) | 107 | 145 | 160 | 181 |
| NITROGEN ADSORPTION AMOUNT AT RELATIVE PRESSURE OF 0.8 ($cm^3$/g) ($N_0$) | 288 | 310 | 350 | 355 |
| RATIO ($N_1/N_0$) | 0.37 | 0.47 | 0.46 | 0.51 |

(continued)

| | EX. B-1 | EX. B-2 | EX. B-3 | EX. B-4 |
|---|---|---|---|---|
| PRESENCE/ABSENCE OF PEAK (i) | PRESENT | ABSENT | ABSENT | ABSENT |
| FULL WIDTH AT HALF MAXIMUM OF PEAK (i) (°) | 0.3 | - | - | - |
| FULL WIDTH AT HALF MAXIMUM OF PEAK (ii) (°) | 7.2 | 8.9 | 9.0 | 9.4 |
| PEAK HEIGHT RATIO | 1.3 | - | - | - |
| SURFACE OXYGEN CONCENTRATION (at%) | 0.3 | 0.9 | 2 | 5 |
| SURFACE CARBON CONCENTRATION (at%) | 100 | 99 | 98 | 95 |
| SPECIFIC SURFACE AREA ($m^2/g$) | 370 | 561 | 600 | 650 |
| 5% WEIGHT LOSS TEMPERATURE (°C) | 695 | 589 | 524 | 514 |

[Table 4]

| | COMP. EX. B-1 | COMP. EX. B-2 |
|---|---|---|
| HEAT TREATMENT TEMPERATURE (°C) | 900 | 900 |
| FIRST PEAK (nm) | 7 | 5 |
| SECOND PEAK (nm) | 75 | 120 |
| NITROGEN ADSORPTION AMOUNT AT RELATIVE PRESSURE OF 0.2 ($cm^3/g$) ($N_1$) | 287 | 330 |
| NITROGEN ADSORPTION AMOUNT AT RELATIVE PRESSURE OF 0.8 ($cm^3/g$) ($N_0$) | 451 | 455 |
| RATIO ($N_1/N_0$) | 0.64 | 0.73 |
| PRESENCE/ABSENCE OF PEAK (i) | ABSENT | ABSENT |
| FULL WIDTH AT HALF MAXIMUM OF PEAK (ii) (°) | 10.1 | 11.2 |
| SURFACE OXYGEN CONCENTRATION (at%) | 15 | 20 |
| SURFACE CARBON CONCENTRATION (at%) | 85 | 80 |
| SPECIFIC SURFACE AREA ($m^2/g$) | 1020 | 1040 |
| 5% WEIGHT LOSS TEMPERATURE (°C) | 425 | 405 |

(Example C-1)

A resin-molded article was obtained in the same manner as in Example A-1. In addition, a block-like porous carbon material was obtained in the same manner as in Example A-1.

(Example C-2)

A resin-molded article was obtained in the same manner as in Example C-1. The obtained resin-molded article was heated to 900 °C at 1.5 °C/min in a nitrogen atmosphere and then held at 900 °C for three hours. Subsequently, the resin-molded article was heated to 1800 °C at 10 °C/min, and then held at 1800 °C for one hour to obtain a block-like porous carbon material. The obtained porous carbon material was pulverized with a mortar to produce a powder-like porous carbon material.

(Example C-3)

A resin-molded article was obtained in the same manner as in Example C-1. The obtained resin-molded article was heated to 900 °C at 1.5 °C/min in a nitrogen atmosphere and then held at 900 °C for three hours. Subsequently, the resin-molded article was heated to 1400 °C at 10 °C/min, and then held at 1400 °C for one hour to obtain a block-like porous carbon material. The obtained porous carbon material was pulverized with a mortar to produce a powder-like porous carbon material.

(Example C-4)

A resin-molded article was obtained in the same manner as in Example C-1. The obtained resin-molded article was heated to 1200 °C at 1.5 °C/min in a nitrogen atmosphere and then held at 1200 °C for three hours to obtain a block-like porous carbon material. The obtained porous carbon material was pulverized with a mortar to produce a powder-like porous carbon material.

(Example C-5)

A resin-molded article was obtained in the same manner as in Example C-1. The obtained resin-molded article was heated to 900 °C at 1.5 °C/min in a nitrogen atmosphere and then held at 900 °C for three hours to obtain a block-like porous carbon material. The obtained porous carbon material was pulverized with a mortar to produce a powder-like porous carbon material.

(Comparative Example C-1)

A resin-molded article was obtained in the same manner as in Example C-1. The obtained resin-molded article was heated to 900 °C at 1.5 °C/min in a nitrogen atmosphere and then held at 900 °C for three hours to obtain a block-like material. The obtained block-like material was pulverized with a mortar into a powder-like form, heated to 430 °C at 1.5 °C/min in an air atmosphere, and then held at 430 °C for 1.5 hours to obtain a powder-like porous carbon material.

(Comparative Example C-2)

A resin-molded article was obtained in the same manner as in Example C-1. The obtained resin-molded article was heated to 900 °C at 1.5 °C/min in a nitrogen atmosphere and then held at 900 °C for three hours to obtain a block-like material. Next, the obtained block-like material was pulverized with a mortar into a powder-like form, heated to 460 °C at 1.5 °C/min in an air atmosphere, and then held at 460 °C for one hour to obtain a powder-like porous carbon material.

The same measurements as those above were performed on the porous carbon materials obtained in Examples C-1 to C-5 and Comparative Examples C-1 and C-2. The results are shown in Table 5 and Table 6. The following measurements were performed.

[Table 5]

|  | EX. C-1 | EX. C-2 | EX. C-3 | EX. C-4 |
|---|---|---|---|---|
| HEAT TREATMENT TEMPERATURE (°C) | 2100 | 1800 | 1400 | 1200 |
| FIRST PEAK (nm) | 6 | 5 | 5 | 6 |
| SECOND PEAK (nm) | 160 | 100 | 110 | 130 |
| SURFACE OXYGEN CONCENTRATION (at%) | 0.3 | 0.5 | 0.9 | 2 |
| SURFACE CARBON CONCENTRATION (at%) | 100 | 99 | 99 | 98 |
| PRESENCE/ABSENCE OF PEAK (i) | PRESENT | PRESENT | ABSENT | ABSENT |
| FULL WIDTH AT HALF MAXIMUM OF PEAK (i) (°) | 0.3 | 0.4 | - | - |
| FULL WIDTH AT HALF MAXIMUM OF PEAK (ii) (°) | 7.2 | 7.8 | 8.9 | 9.0 |
| PEAK HEIGHT RATIO | 1.3 | 0.9 | - | - |
| NITROGEN ADSORPTION AMOUNT AT RELATIVE PRESSURE OF 0.2 (cm$^3$/g) ($N_1$) | 107 | 116 | 155 | 160 |
| NITROGEN ADSORPTION AMOUNT AT RELATIVE PRESSURE OF 0.8 (cm$^3$/g) ($N_0$) | 288 | 290 | 310 | 350 |
| RATIO ($N_1/N_0$) | 0.37 | 0.40 | 0.47 | 0.46 |
| SPECIFIC SURFACE AREA (m$^2$/g) | 370 | 440 | 561 | 600 |
| 5% WEIGHT LOSS TEMPERATURE (°C) | 695 | 640 | 589 | 524 |
| WATER VAPOR ADSORPTION AMOUNT (cm$^3$/g) | 0.9 | 1.6 | 3 | 10 |

[Table 6]

| | EX. C-5 | COMP. EX. C-1 | COMP. EX. C-2 |
|---|---|---|---|
| HEAT TREATMENT TEMPERATURE (°C) | 900 | 900 | 900 |
| FIRST PEAK (nm) | 5 | 7 | 6 |
| SECOND PEAK (nm) | 105 | 75 | 120 |
| SURFACE OXYGEN CONCENTRATION (at%) | 4 | 7 | 15 |
| SURFACE CARBON CONCENTRATION (at%) | 96 | 93 | 85 |
| PRESENCE/ABSENCE OF PEAK (i) | ABSENT | ABSENT | ABSENT |
| FULL WIDTH AT HALF MAXIMUM OF PEAK (i) (°) | | | |
| FULL WIDTH AT HALF MAXIMUM OF PEAK (ii) (°) | 9.4 | 10.5 | 10.1 |
| NITROGEN ADSORPTION AMOUNT AT RELATIVE PRESSURE OF 0.2 ($cm^3$/g) ($N_1$) | 181 | 267 | 287 |
| NITROGEN ADSORPTION AMOUNT AT RELATIVE PRESSURE OF 0.8 ($cm^3$/g) ($N_0$) | 355 | 431 | 451 |
| RATIO ($N_1/N_0$) | 0.51 | 0.62 | 0.64 |
| SPECIFIC SURFACE AREA ($m^2$/g) | 650 | 860 | 1020 |
| 5% WEIGHT LOSS TEMPERATURE (°C) | 514 | 430 | 425 |
| WATER VAPOR ADSORPTION AMOUNT ($cm^3$/g) | 30 | 50 | 172 |

## REFERENCE SIGNS LIST

10     Resin-molded article

11     Resin material

12     Latex particles

20     Porous carbon material

## Claims

1. A porous carbon material having a first peak positioned in a pore size range of 3 nm or more and less than 10 nm and a second peak positioned in a pore size range of 10 nm or more and 1 $\mu$m or less in a pore size distribution measured by mercury intrusion porosimetry,
the porous carbon material satisfying at least one of the following (A), (B), or (C):

   (A) having a peak (i) that has a full width at half maximum of 0.6° or less and a peak top within a range of $2\theta = 25°$ to 27° in an X-ray diffraction pattern;
   (B) having a nitrogen adsorption amount at a relative pressure of 0.2 of 10 $cm^3$/g or more and 250 $cm^3$/g or less in a nitrogen adsorption measurement; or
   (C) having a surface oxygen concentration measured by XPS of 6 at% or less.

2. The porous carbon material according to claim 1, satisfying (A).

3. The porous carbon material according to claim 2, further having a peak (ii) that has a full width at half maximum of 9° or less and partially overlaps with the peak (i) in an X-ray diffraction pattern.

4. The porous carbon material according to claim 1, satisfying (B).

5. The porous carbon material according to claim 4, wherein the nitrogen adsorption amount of the porous carbon material is 10 cm$^3$/g or more and 200 cm$^3$/g or less.

6. The porous carbon material according to claim 1, satisfying (C).

7. The porous carbon material according to claim 6, wherein the porous carbon material has a surface oxygen concentration measured by XPS of 2 at% or less, and
has a surface carbon concentration measured by XPS of 98 at% or more.

8. The porous carbon material according to any one of claims 1 to 7, wherein the porous carbon material has a specific surface area of 200 m$^2$/g or more and 1800 m$^2$/g or less.

9. The porous carbon material according to any one of claims 1 to 7, wherein the first peak is positioned in a pore size range of 4 nm or more and 7 nm or less.

10. The porous carbon material according to any one of claims 1 to 7, wherein the second peak is positioned in a pore size range of 20 nm or more and 700 nm or less.

11. A method for producing a porous carbon material, the method comprising:

a preparation step of preparing a resin-molded article containing a resin material serving as a carbon source, a first template, and a second template; and
a heat treatment step of obtaining the porous carbon material according to claim 2 or 3 by heat-treating the resin-molded article,
wherein the heat treatment step comprises heat treatment at 1200 °C or higher,
the first template comprises an amphiphilic molecule, and
the second template comprises a latex particle.

12. The method for producing a porous carbon material according to claim 11, wherein the heat treatment step comprises:

a first heat treatment step of obtaining a first heat-treated body by heat-treating the resin-molded article at a heat treatment temperature of less than 1200 °C; and
a second heat treatment step of heat-treating the first heat-treated body at a heat treatment temperature of 1500 °C or higher.

13. The method for producing a porous carbon material according to claim 11, wherein the heat treatment step comprises:

a first heat treatment step of obtaining a first heat-treated body by heat-treating the resin-molded article at a heat treatment temperature of less than 1200 °C;
a pulverization step of pulverizing the first heat-treated body; and
a second heat treatment step of heat-treating the first heat-treated body that was pulverized in the pulverization step at a heat treatment temperature of 1500 °C or higher.

14. The method for producing a porous carbon material according to claim 11, wherein the heat treatment step comprises heat treatment at 2000 °C or higher.

15. The method for producing a porous carbon material according to claim 11, wherein heat treatment at 1500 °C or higher in the heat treatment step is performed in an argon atmosphere.

16. A method for producing a porous carbon material, the method comprising:

a preparation step of preparing a resin-molded article containing a resin material serving as a carbon source, a first template, and a second template; and
a heat treatment step of obtaining the porous carbon material according to any one of claims 4 to 7 by heat-treating the resin-molded article,
wherein the heat treatment step comprises heat treatment at 1100 °C or higher,
the first template comprises an amphiphilic molecule, and
the second template comprises a latex particle.

**17.** The method for producing a porous carbon material according to claim 16, wherein the heat treatment step comprises:

a first heat treatment step of obtaining a first heat-treated body by heat-treating the resin-molded article at a heat treatment temperature of less than 1100 °C; and
a second heat treatment step of heat-treating the first heat-treated body at a heat treatment temperature of 1100 °C or higher.

**18.** The method for producing a porous carbon material according to claim 16, wherein the heat treatment step comprises:

a first heat treatment step of obtaining a first heat-treated body by heat-treating the resin-molded article at a heat treatment temperature of less than 1100 °C;
a pulverization step of pulverizing the first heat-treated body; and
a second heat treatment step of heat-treating the first heat-treated body that was pulverized in the pulverization step at a heat treatment temperature of 1100 °C or higher.

**19.** The method for producing a porous carbon material according to claim 16, wherein the heat treatment step comprises heat treatment at 2000 °C or higher.

**20.** The method for producing a porous carbon material according to claim 16, wherein heat treatment at 1100 °C or higher in the heat treatment step is performed in an argon atmosphere.

[Fig. 1]

(a)

(b)

[Fig. 2]

[Fig. 3]

## INTERNATIONAL SEARCH REPORT

<table>
<tr><td colspan="2">International application No.</td></tr>
<tr><td colspan="2">PCT/JP2024/026680</td></tr>
</table>

**A. CLASSIFICATION OF SUBJECT MATTER**

*C01B 32/05*(2017.01)i

FI: C01B32/05

According to International Patent Classification (IPC) or to both national classification and IPC

**B. FIELDS SEARCHED**

Minimum documentation searched (classification system followed by classification symbols)

C01B32/00-32/991

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2022/059594 A1 (DENKA CO., LTD.) 24 March 2022 (2022-03-24) claims, [0040], [0077]-[0078], [0090]-[0091] | 1, 4-5, 8-10, 16, 19-20 |
| X | JP 2020-514231 A (GROUP 14 TECHNOLOGIES, INC.) 21 May 2020 (2020-05-21) paragraphs [0339], [0366], table 3, fig. 2 | 1, 6-8 |
| A | JP 2021-510364 A (ECOLE POLYTECHNIQUE FEDERALE DE LAUSANNE) 22 April 2021 (2021-04-22) | 1-20 |
| A | WO 2016/039268 A1 (TOHOKU TECHNO ARCH CO., LTD.) 17 March 2016 (2016-03-17) | 1-20 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 September 2024** | **01 October 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

| International application No. |
| --- |
| **PCT/JP2024/026680** |

| Patent document cited in search report | | | Publication date (day/month/year) | Patent family member(s) | | | Publication date (day/month/year) |
| --- | --- | --- | --- | --- | --- | --- | --- |
| WO | 2022/059594 | A1 | 24 March 2022 | EP 4197968 A1 claims, paragraphs [0040], [0077]-[0078], [0090]-[0091] CN 115916693 A KR 10-2023-0067598 A | | | |
| JP | 2020-514231 | A | 21 May 2020 | US 2020/0020935 A1 paragraphs [0395], [0413], table 3, fig. 2 CN 110582823 A KR 10-2019-0122805 A | | | |
| JP | 2021-510364 | A | 22 April 2021 | US 2021/0061653 A1 CN 111757845 A KR 10-2020-0111721 A | | | |
| WO | 2016/039268 | A1 | 17 March 2016 | US 2017/0225955 A1 CN 106573780 A KR 10-2017-0048254 A | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014034475 A